# EUROPÄISCHE PATENTANMELDUNG

(11) **EP 4 811 577 A1**
(43) Veröffentlichungstag der Anmeldung: **23.09.2026**
(21) Anmeldenummer: 26164265.6
(22) Anmeldetag: 12.03.2026
(51) Int. Cl.: H02G 9/10

(54) **WANDELEMENT FÜR EINE SEITENWAND EINES SCHACHTS**

(30) Priorität: 17.03.2025 DE 102025110144
(71) Anmelder: Langmatz GmbH, 82467 Garmisch-Partenkirchen (DE)
(72) Erfinder: THUMM, Matthias, 82481 Mittenwald (DE); JAIS, Stefan, 82481 Mittenwald (DE)
(74) Vertreter: Prinz & Partner mbB

(57) **Zusammenfassung**

Die Erfindung betrifft ein Wandelement (14) für eine Seitenwand eines Schachts (10), insbesondere eines Kabelschachts (10), wobei an entgegengesetzten Rändern komplementäre Bestandteile von Modul-Rasteilen angeordnet sind. Die Erfindung betrifft auch ein Modul (12) für einen Schacht (10), wobei das Modul aus vier miteinander verbundenen Wandelementen (14) besteht.

## Beschreibung

Die Erfindung bezieht sich allgemein auf Schächte, die als Teil der öffentlichen Infrastruktur in den Erdboden eingebracht werden. Insbesondere betrifft sie modulare Schächte, in denen unterschiedliche Leitungen - etwa Stromkabel, Glasfaserkabel oder Fernwärmerohre - verbunden, durchgeleitet oder zusammengeführt werden können. Soweit nachfolgend von Leitungen gesprochen werden, ist dies als Oberbegriff für sämtliche Leitungen, Kabel, Rohre, etc. zu verstehen, die im Erdreich verlegt werden und zu denen der Schacht einen Zugang ermöglicht.

Solche Schächte werden in Leitungsnetzen für Stromversorgung, elektronische Steuerungssysteme, Telekommunikation und auch Energieversorgung eingesetzt. Sie bestehen aus einem Grundkörper aus Kunststoff, einem oben auf den Grundkörper aufgesetzten Rahmen und einem Schachtdeckel. Wird der Schachtdeckel entfernt, ist das Innere des Schachts zugänglich, so dass dort Leitungen miteinander verbunden werden können, Verzweigungen montiert werden können oder in sonstiger Weise an den Leitungen gearbeitet werden kann. Solche Schächte können auch als Unterflurverteiler oder als Fundament für Ladesäulen oder ähnliches verwendet werden.

Der Schacht wird üblicherweise so im Erdreich vergraben, dass der Schachtdeckel bündig mit dem Bodenniveau ist. Abhängig vom Einsatzort muss der Schachtdeckel nicht nur den unbefugten Zugang zum Inneren des Schachts verhindern, sondern auch die Verkehrslasten aufnehmen, beispielsweise wenn der Schacht an einem Ort eingebaut ist, an dem er von Fahrzeugen überfahren wird. Die Seitenwände des Schachts müssen dann zusätzlich zu horizontalen Lasten, die aus dem wirkenden Erddruck resultieren, auch vertikale Lasten aufnehmen und nach unten ableiten, die von Fahrzeugen resultieren.

Bei Bau- und Infrastrukturprojekten stellt sich regelmäßig die Herausforderung, dass der Schacht an unterschiedliche Gegebenheiten angepasst werden muss, also unterschiedliche Arten von Leitungen, unterschiedliche Anzahlen von Leitungen und unterschiedliche Positionen von Leitungen, die bereits dort verlegt sind, wo der Schacht eingebaut werden soll. Oft werden die Schächte entsprechend den jeweiligen Gegebenheiten spezifisch konfiguriert bestellt, oder ein Bauunternehmen oder ein Bauamt muss eine größere Zahl verschieden konfigurierter Schächte vorrätig haben, um kurzfristig flexibel reagieren zu können, wenn ein Schacht ausgetauscht werden muss oder die Gegebenheiten vor Ort anders sind als erwartet.

Darüber hinaus ergibt sich beim Einbau in bereits bestehende Infrastruktur das Problem, dass Leitungen seitlich in den Schacht eingebracht werden müssen. Dies setzt häufig voraus, dass vorab entsprechende Durchbrüche in der Schachtwand vorbereitet werden. Die Nachrüstung solcher Durchlässe kann je nach Schachtkonstruktion aufwendig und teuer sein. Muss spanend nachbearbeitet werden, führt dies zu einer Lärmbelastung. Außerdem wird gesundheitsgefährdender Staub freigesetzt. Es kann auch erforderlich werden, bestehende Leitungen freizulegen oder gar umzulegen, wenn der Schacht keine Funktion für das "Überbauen" vorhandener Leitungen hat.

Die Aufgabe der Erfindung besteht darin, einen Schacht zu schaffen, der flexibel an die jeweiligen Anforderungen angepasst werden kann.

Zur Lösung dieser Aufgabe ist allgemein vorgesehen, dass Wandelements mittels einer Rastverbindung zu Modulen zusammengebaut werden können. Dies kann ohne Werkzeug mit geringem Aufwand vor Ort erfolgen. Weiterhin ergibt sich der Vorteil, dass die Wandelemente flach gestapelt transportiert werden können, so dass sich ein geringes Transportvolumen ergibt.

Konkret ist erfindungsgemäß ein Wandelement für eine Seitenwand eines SSchachts vorgesehen, insbesondere eines Kabelschachts, wobei an entgegengesetzten Rändern komplementäre Bestandteile von Modul-Rasteilen angeordnet sind. Die Wandteile können mittels der Modul-Rastteile zusammengesteckt werden, so dass ein aus (üblicherweise) vier Wandelementen bestehendes Modul erhalten wird, das eigenstabil ist. Mehrere Module können vertikal zusammengesteckt werden, so dass ein Schacht mit einer gewünschten Höhe erhalten wird. Dabei kann der Schacht werkzeugfrei montiert und bei Bedarf auch vorzugsweise wieder werkzeugfrei demontiert werden.

Gemäß einer Ausführungsform ist vorgesehen, dass die Modul-Rastteile durch mindestens eine Stecknase an einem Rand des Wandelements und mindestens eine Steckaufnahme am entgegengesetzten Rand gebildet sind. Diese Art der Verbindung zeichnet sich durch eine hohe Stabilität aus.

Vorzugweise weist die Stecknase eine sich zum freien Ende verringernde Dicke auf. Dies erleichtert es, die Stecknase in die Steckaufnahme einzustecken, da die sich verringernde Dicke ähnlich wie eine Einführschräge wirkt.

Gemäß einer bevorzugten Ausgestaltung weist die Stecknase eine gekrümmte Außenfläche auf. Dies erleichtert es, das letzte Wandelement eines Moduls in seine finale Position zu führen.

Vorzugsweise ist in der Steckaufnahme ein Schnappelement vorgesehen, das mit einem Widerlager an der Stecknase eines zweiten Wandelements zusammenwirken kann. Das Schnappelement verriegelt das Wandelement automatisch, sobald es vollständig mit der Stecknase in die Steckaufnahme eingesteckt ist.

An der Steckaufnahme und an der Stecknase kann eine Eingriffsmulde vorgesehen sein, so dass das Schnappelement von Hand aus einer Sperrposition in eine Freigabeposition verstellt werden kann. Es ist dann kein Werkzeug erforderlich, um die Wandelement wieder voneinander zu lösen, falls dies nötig werden sollte.

Gemäß einer Ausführungsform ist vorgesehen, dass die Modul-Rastteile an einem ersten Ende mindestens zwei Verbindungsblöcke auf einer ersten und einer dritten Position aufweist und am zweiten Ende mindestens zwei Verbindungsblöcke auf einer zweiten und einer vierten Position aufweist, wobei am ersten Ende mindestens zwei Aufnahmeöffnungen auf einer zweiten und einer vierten Position vorgesehen sind und am zweiten Ende mindestens zwei Aufnahmeöffnungen auf ersten und einer dritten Position vorgesehen sind. Mit den Verbindungsblöcken können zwei Wandelemente besonders stabil im Hinblick auf vertikale Belastungen, die zwischen zwei Wandelementen in vertikaler Richtung wirken, verbunden werden.

Vorzugsweise ist dabei vorgesehen, dass an jedem Ende mindestens ein Schnappelement vorgesehen ist, das mit einem Widerlager am zugeordneten Ende eines anderen Wandelements zusammenwirken kann. Auf diese Weise können zwei Wandelemente ohne Werkzeug aneinander verriegelt werden, wenn sie vollständig zusammengesteckt sind.

Vorzugsweise weist das Widerlager eine Nut auf, die als Führung für ein Entriegelungswerkzeug dienen kann. Dies erleichtert es einem Monteur, das Werkzeug korrekt anzusetzen.

Gemäß einer Ausgestaltung sind zwei Schnappelemente vorgesehen, so dass die Eckverbindung besonders stabil ist.

Vorzugsweise ist an den Verbindungsblöcken und/oder den Aufnahmeöffnungen eine Einführschräge vorgesehen, was das Zusammenführen der Wandelemente in den Eckabschnitten erleichtert.

Dabei kann ein Führungsvorsprung vorgesehen sein, mit dem die Einführschräge zusammenwirkt, wenn die Ecken miteinander verbunden werden, wobei die Einführschräge im vollständig montierten Zustand außerhalb des Führungsvorsprungs liegt. Dies ermöglicht es, die Wandelemente in einer Richtung zusammenzuführen und in einer dazu senkrechten Richtung wieder zu demontieren.

Die Erfindung betrifft auch ein Modul für einen Schacht, wobei das Modul aus vier miteinander verbundenen Wandelementen besteht, von denen das vierte durch eine kombinierte Steck- und Drehbewegung mit zwei anderen Wandelementen zu einem geschlossenen Modul verbindbar ist. Hinsichtlich der sich ergebenden Vorteile wird auf die obigen Erläuterungen verwiesen. Insbesondere ist es vorteilhaft, dass die Wandelemente werkzeuglos voneinander lösbar sind.

Weiterhin betrifft die Erfindung ein Modul für einen Schacht, wobei das Modul aus vier miteinander verbundenen Wandelementen, von denen das vierte durch eine rein translatorische Bewegung mit zwei anderen Wandelementen zu einem geschlossenen Modul verbindbar ist. Auch hier wird hinsichtlich der sich ergebenden Vorteile auf die obigen Erläuterungen verwiesen. Zum Montieren der Wandteile ist kein Werkzeug erforderlich, während zum Demontieren ein sehr einfaches Steckwerkzeug ausreichend ist.

Die Erfindung wird nachfolgend anhand verschiedener Ausführungsformen beschrieben, die in den beigefügten Zeichnungen dargestellt sind. **In** den Zeichnungen zeigen:
- Figur 1 einen Schacht gemäß einer ersten Ausführungsform der Erfindung in einer perspektivischen Ansicht,
- Figur 2 den Schacht von Figur 1 in einer ersten Seitenansicht,
- Figur 3 den Schacht von Figur 1 in einer zweiten Seitenansicht,
- Figur 4 einen Schacht gemäß einer zweiten Ausführungsform der Erfindung in einer perspektivischen Ansicht,
- Figur 5 ein Modul für den Schacht der ersten Ausführungsform in einer perspektivischen Ansicht,
- Figur 6 das Modul von Figur 5 in einem teilmontierten Zustand,
- Figur 7 einen Eckabschnitt des Moduls von Figur 5 in einer vergrößerten perspektivischen Ansicht,
- Figur 8 den Eckabschnitt von Figur 7 horizontal geschnitten,
- Figur 9 ein Wandelement des Moduls von Figur 5 in einer perspektivischen Ansicht,
- Figur 10 das Wandelement von Figur 9 in einer ersten Seitenansicht, wobei das Wandelement bearbeitet wurde,
- Figur 11 eine Detailansicht des in Figur 10 rechten Endes des Wandelements,
- Figur 12 das Detail von Figur 11 in einer perspektivischen Ansicht,
- Figur 13 das Wandelement von Figur 9 in einer zweiten Seitenansicht,
- Figur 14 eine Detailansicht des in Figur 13 linken Endes des Wandelements,
- Figur 15 eine perspektivische Detailansicht des in Figur 13 rechten Endes des Wandelements,
- Figur 16 in einer Ansicht entsprechend derjenigen von Figur 7 einen Eckabschnitt eines Moduls gemäß einer zweiten Ausführungsvariante,
- Figur 17 den Eckabschnitt von Figur 16 in einem Horizontalschnitt,
- Figur 18 den Eckabschnitt von Figur 16 in einem teilmontierten Zustand,
- Figur 19 den Eckabschnitt von Figur 16 von innerhalb des Moduls betrachtet,
- Figur 20 in einer Ansicht entsprechend derjenigen von Figur 7 einen Eckabschnitt eines Moduls gemäß einer dritten Ausführungsvariante,
- Figur 21 den Eckabschnitt von Figur 20 in einem teilmontierten Zustand von innerhalb des Moduls betrachtet,
- Figur 22 den Eckabschnitt von Figur 20 in einem teilmontierten Zustand von außerhalb des Moduls betrachtet,
- Figur 23 eine Detailansicht des Endes des in Figur 22 rechten Wandelements,
- Figur 24 einen Schnitt entlang der Ebene XXIV-XXIV von Figur 21,
- Figur 25 eine horizontal geschnittene Detailansicht des in Figur 23 gezeigten Endes des Wandelements,
- Figur 26 zwei in einer ersten Konfiguration aneinander befestigte Module des Schachts gemäß der ersten Ausführungsform in einer teilgeschnittenen Ansicht von innen,
- Figur 27 das Detail XXVII von Figur 26,
- Figur 28 einen Schnitt entlang der Ebene XXXVIII von Figur 2,
- Figur 29 in vergrößertem Maßstab einen Ausschnitt von Figur 28,
- Figur 30 einen Schnitt entlang der Ebene XXX von Figur 2,
- Figur 31 zwei in einer zweiten Konfiguration aneinander befestigte Module des Schachts gemäß der ersten Ausführungsform in einer perspektivischen Ansicht,

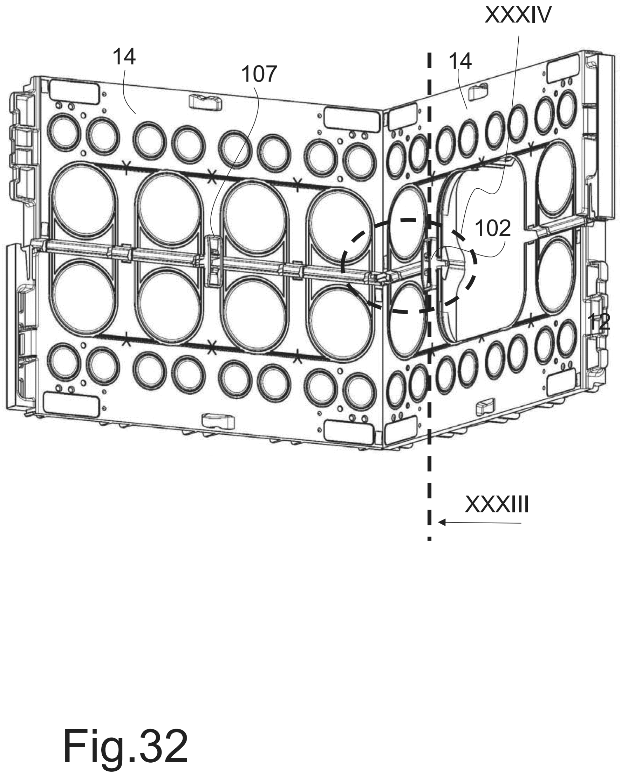

- Figur 32 eine Ecke der Module von Figur 31 von innerhalb der Module betrachtet,
- Figur 33 einen Schnitt entlang der Ebene XXXII von Figur 32,
- Figur 34 in einer vergrößerten Ansicht des Detail XXXIV von Figur 32,
- Figur 35 in einer perspektivischen Ansicht eine Verbinderteil, das zum Verbinden von zwei Modulen in der zweiten Konfiguration verwendet wird,
- Figur 36 das Verbinderteil von Figur 35 in einer Vorderansicht,
- Figur 37 das Verbinderteil von Figur 35 in einer perspektivischen Schnittansicht,

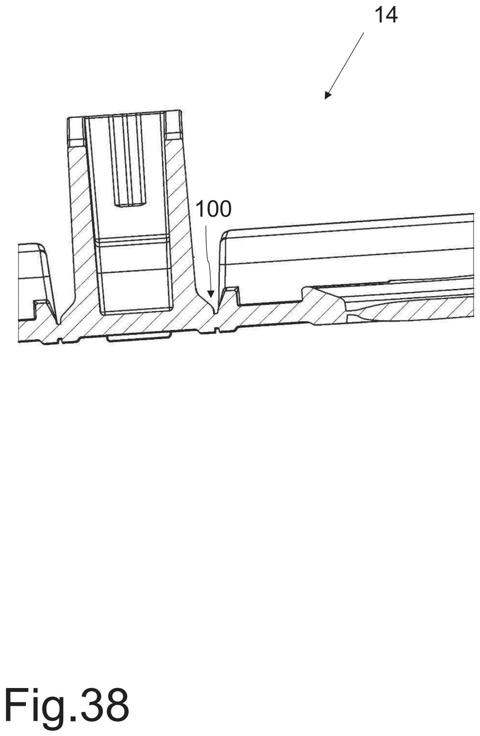

- Figur 38 ein Detail einer Außenkante des Wandelements der ersten Ausführungsform,
- Figur 39 das Detail von Figur 38 in einer perspektivischen Ansicht,
- Figur 40 ein Wandelement für einen Schacht gemäß einer dritten Ausführungsform in einer Seitenansicht,
- Figur 41 das Wandelement von Figur 40 in einer abweichenden Konfiguration,
- Figur 42 in einer perspektivischen Seitenansicht von innen das Wandelement von Figur 40 in einer weiteren Konfiguration,
- Figur 43 in einer perspektivischen Ansicht den Rahmen des Schachts von Figur 1,
- Figur 44 in einer Detailansicht den Eckabschnitt des Rahmens von Figur 43,
- Figur 45 in einer perspektivischen Ansicht ein Segment des Rahmens von Figur 43 in einem Schnitt entlang der Ebene XLV,
- Figur 46 in einer perspektivischen Ansicht das Segment von Figur 45 in einem Schnitt entlang der Ebene XLVI,
- Figur 47 einen Adapterstopfen für den Schacht in einer Draufsicht in einem geschlossenen Zustand,
- Figur 48 den Adapterstopfen von Figur 47 in einer Unteransicht,
- Figur 49 den Adapterstopfen von Figur 47 in einer Seitenansicht,
- Figur 50 den Adapterstopfen von Figur 47 in einer perspektivischen Ansicht,
- Figur 51 in einer Draufsicht den Adapterstopfen von Figur 47 in einer Montageposition,
- Figur 52 den Adapterstopfen von Figur 51 in einer Seitenansicht,
- Figur 53 den Adapterstopfen von Figur 51 in einer ersten perspektivischen Ansicht,
- Figur 54 den Adapterstopfen von Figur 51 in einer zweiten perspektivischen Ansicht; und
- Figur 55 einen Adapterstopfen in einer Ausführungsvariante.

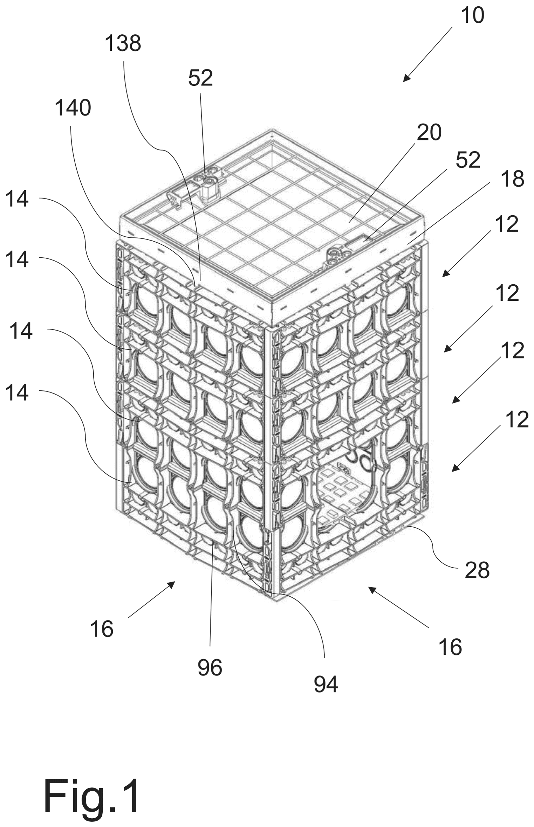

In den Figuren 1 bis 3 ist ein Schacht 10 gemäß einer ersten Ausführungsform gezeigt. Der Schacht 10 ist dafür vorgesehen, im Erdboden eingegraben zu werden, so dass er bündig mit dem Bodenniveau abschließt.

Der Schacht 10 weist mehrere Module 12 auf, die in einer Draufsicht rechteckig sind. In der ersten Ausführungsform sind sie quadratisch. Jedes Modul 12 weist hier wiederum vier Wandelemente 14 auf, die mit ihren Enden mit dem jeweils benachbarten Wandelement 14 verbunden sind.

Die Module 12 sind übereinander angeordnet und miteinander verbunden. Durch die Anzahl der Module 12, die miteinander verbunden werden, kann die Höhe des Schachts 10 flexibel an die jeweiligen Anforderungen angepasst werden.

Im gezeigten Ausführungsbeispiel werden vier Module 12 verwendet. Je nach Anforderung und Einbausituation kann der Schacht auch eine geringer Anzahl an Modulen aufweisen (bis hin zu einem einzigen Modul) oder auch mehr als vier Module.

Übereinanderliegende Wandelemente 14 bilden eine Seitenwand 16 des Schachts 10.

Die Wandelemente 14 bestehen aus Kunststoff. Sie sind spritzgegossen. Alle Wandelemente 14 sind so ausgeführt, dass sie in Spritzgusswerkzeugen gefertigt werden können, ohne dass hierbei Schieber erforderlich sind.

Auf dem obersten der Module 12 ist ein Rahmen 18 angeordnet, der aus Stahl besteht. Der Rahmen 18 dient dazu, einen Schachtdeckel 20 aufzunehmen, der den Zugang zum Inneren des Schachts 10 verschließt.

Der Schachtdeckel 20 kann auf dem Rahmen 18 verriegelt werden, so dass er nicht von unbefugten Personen abgenommen werden kann und auch nicht das Risiko besteht, dass er beim Überfahren durch Vibrationen oder Luftsog aus dem Rahmen 18 gehoben wird.

In jedem Wandelement 14 sind mehrere unterschiedliche Durchtrittsöffnungen 22, 23 vorgesehen, die im Ausgangszustand jeweils von einem Deckel 24 verschlossen sind.

Die Wandelemente 14, aus denen sich die Module 12 zusammensetzen, sind in einer Seitenansicht allgemein rechteckig und haben zwei lange Ränder und zwei kurze Ränder. Der Einfachheit halber wird der längere Rand, der bei den meisten Konfigurationen im Einbauzustand oben ist, als der obere Rand 25 bezeichnet. Der dazu parallele Rand wird als der untere Rand 26 bezeichnet. Die dazwischenliegenden kurzen Ränder werden als Seitenränder 27 bezeichnet.

Ebenfalls der Einfachheit halber wird die Seite der Wandelemente 14, die im montierten Zustand des Schachts 10 auf der Außenseite liegt, als die Außenseite der Wandelemente 14 bezeichnet. Dementsprechend ist die Innenseite der Wandelemente 14 die Seite, die im montierten Zustand des Schachts 10 dem gegenüberliegenden Wandelement 14 zugewandt ist.

Soweit nachfolgend Begriffe wie "oben", "unten" oder "vertikal" verwendet werden, wird auf die normale Einbauposition des Schachts 10 Bezug genommen, in der der Schachtdeckel 20 oben liegt und waagerecht ausgerichtet ist.

In der Konfiguration der Figuren 1 bis 3 besteht der Schacht 10 aus vier Modulen 12. Auf den oberen Rand 25 der vier Wandelemente 14 des obersten Moduls 12 ist der Rahmen 18 aufgesetzt. Der untere Rand 26 der Wandelemente 14 des ersten und des zweiten Moduls 12 ist auf den oberen Rand 25 der Wandelemente 14 des zweiten und des dritten Moduls 12 aufgesetzt.

Der untere Rand 26 der Wandelemente 14 des dritten Moduls 12 ist hier an den unteren Rand 26 der Wandelemente 14 des vierten Moduls 12 angesetzt. Das vierte Modul 12 ist also "umgedreht" montiert. Hierdurch kann eine rechteckige Durchtrittsöffnung 21 geschaffen oder die Position von Durchführungen verschoben werden.

An die vom Rahmen 18 abgewandte Seite der Wandelemente 14 des vierten Moduls 12 ist eine Bodenplatte 28 angesetzt.

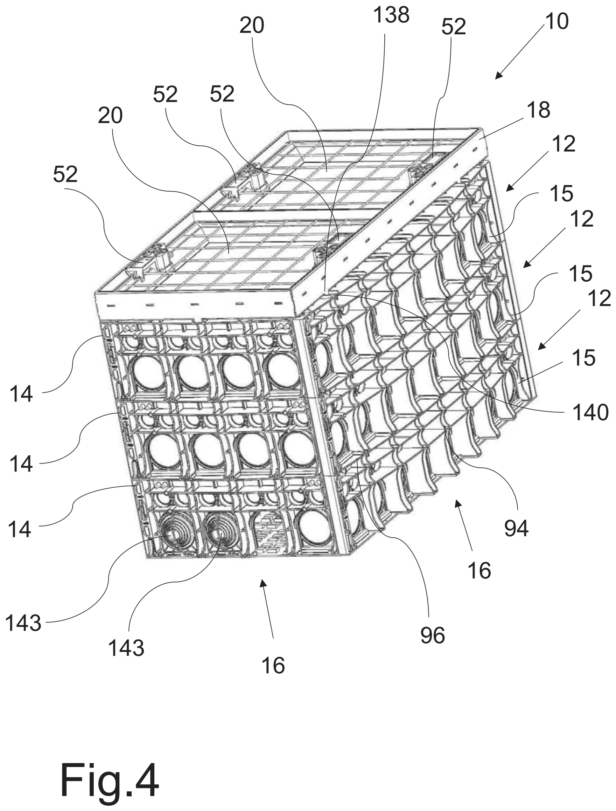

In Figur 4 ist eine zweite Ausführungsform gezeigt. Für die von der ersten Ausführungsform bekannten Bauteile und Merkmale werden dieselben Bezugszeichen verwendet, und es wird diesbezüglich auf die obigen Erläuterungen verwiesen.

Der Unterschied zwischen der ersten und der zweiten Ausführungsform besteht darin, dass bei der zweiten Ausführungsform der Schacht 10, in einem horizontalen Schnitt betrachtet, nicht quadratisch ist wie bei der ersten Ausführungsform, sondern rechteckig mit zwei längeren Wandelementen 15 und zwei kürzeren Wandelementen 14.

Im Unterschied zur ersten Ausführungsform besteht der Schacht 10 bei der zweiten Ausführungsform auch nur aus drei miteinander verbundenen Modulen 12. Auch hier kann aber eine abweichende Anzahl von Modulen verwendet werden.

Ein weiterer Unterschied besteht darin, dass im Rahmen 18 zwei quadratische Schachtdeckel 20 nebeneinander aufgenommen sind.

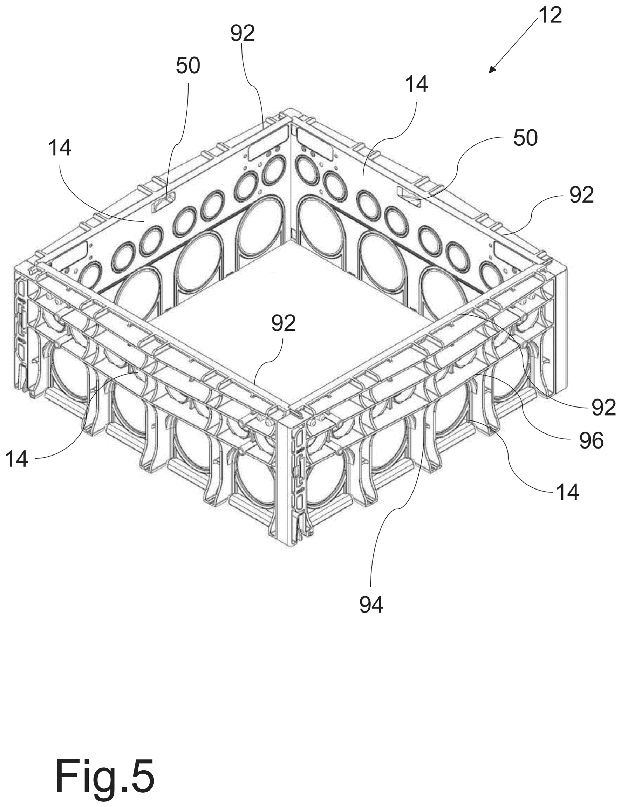

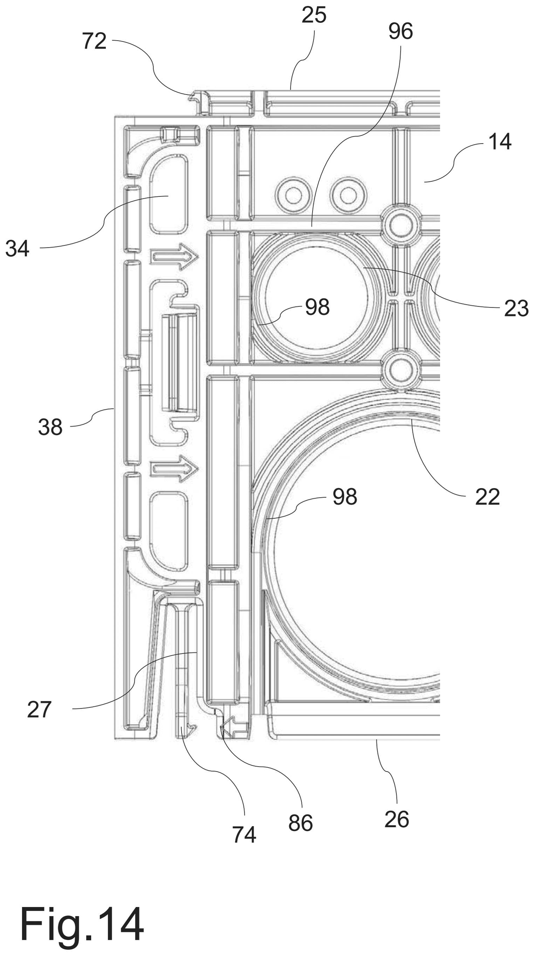

Anhand der Figuren 5 bis 15 werden nachfolgend die Module 12 und die Wandelemente 14 beschrieben, aus denen der Schacht 10 der ersten Ausführungsform aufgebaut ist.

Die Wandelemente 14, die ein Modul 12 bilden, sind an ihren kurzen Rändern in einem Winkel von 90° miteinander verbunden. Die Montage erfolgt werkzeugfrei. Die gebildete Verbindung ist auch werkzeugfrei wieder lösbar.

Bei der ersten Ausführungsform weist jedes Wandelement 14 an einem Seitenrand einen Bestandteil von zueinander komplementären Modul-Rastteilen auf.

Bei der ersten Ausführungsform sind diese Modul-Rastteile gebildet durch eine Stecknase 32 an einem Seitenrand und eine Steckaufnahme 34 an dem anderen Seitenrand.

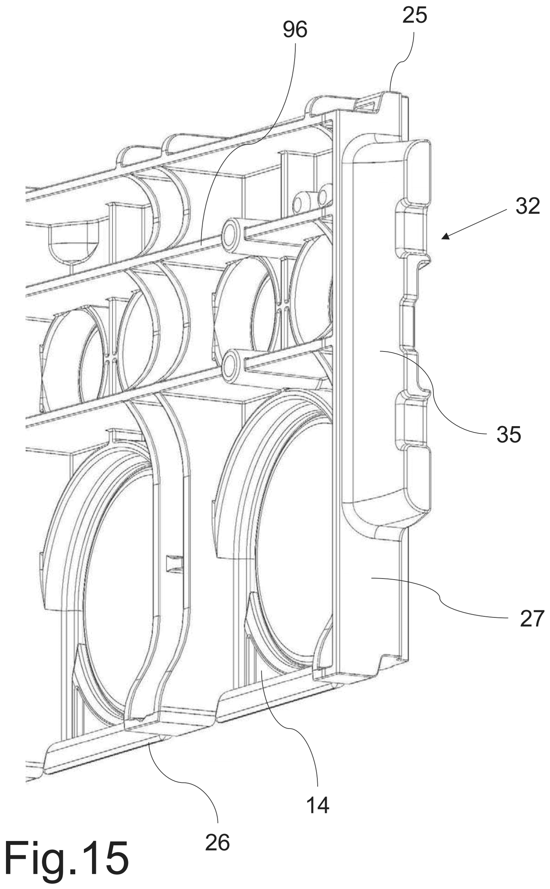

Die Stecknase 32 (siehe insbesondere in Figur 15) weist auf der Außenseite eine durchgehende, zu einer vertikalen Achse konkave Außenfläche 35 auf. Auf der Innenseite ist die Stecknase 32 mit Verstärkungsrippen 36 versehen.

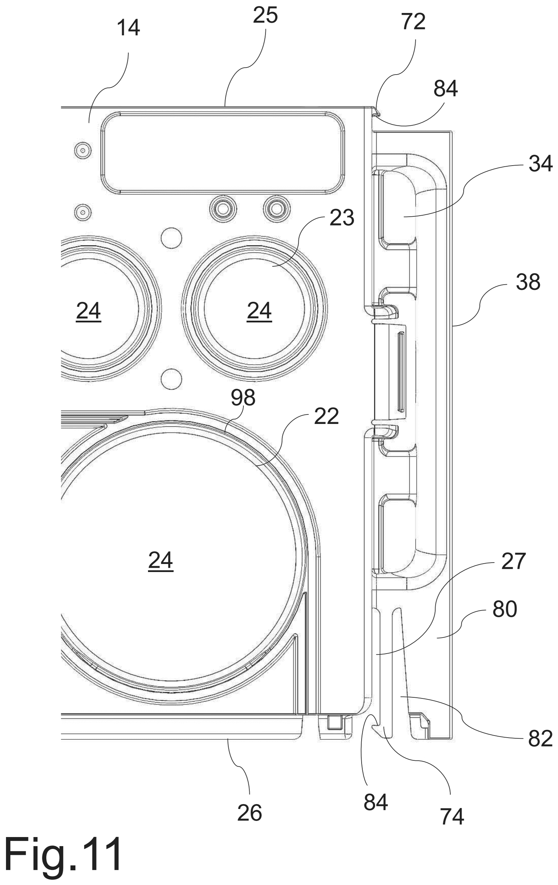

Die Steckaufnahme 34 (siehe insbesondere die Figuren 11, 12 und 14) ist mit einem außenliegenden Bügel 38 versehen, der den Raum umgibt, in den die Stecknase 32 eines anderen Wandelements 14 eingesteckt werden kann.

Der Bügel 38 weist an seinem langen Abschnitt eine gekrümmte Innenfläche 39 auf, die komplementär zur gekrümmten Außenfläche 35 der Stecknasen 32 ist.

Auf der Außenseite des Wandelements 14 ist der Bügel 38 durch zwei Stege 40 mit dem Inneren des Wandelements 14 verbunden. Dadurch sind drei Durchgangsöffnungen 41 gebildet, denen Vorsprünge 42 an der Stecknase 32 zugeordnet sind.

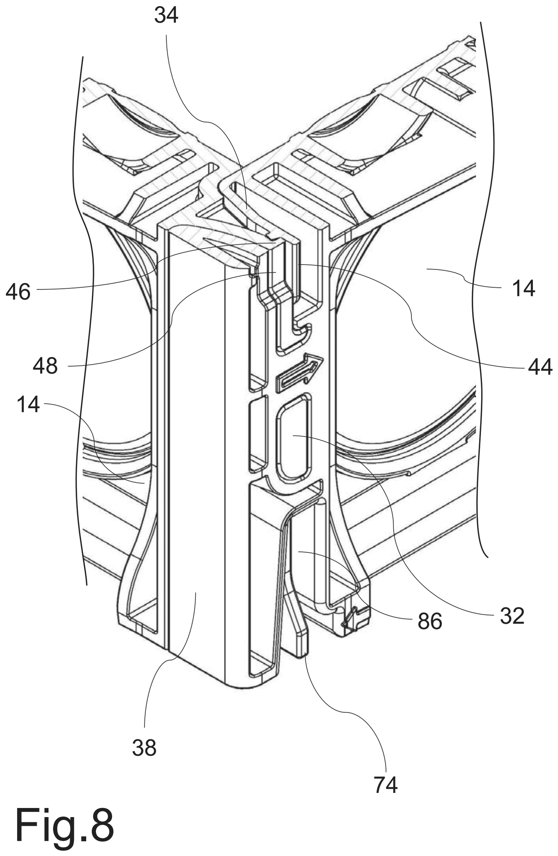

Innerhalb des vom Bügel 38 definierten Raumes ist ein Schnappelement 44 vorgesehen, das bei miteinander zu einem Modul 12 verbundenen Wandelementen 14 mit einem Widerlager 46 zusammenwirken kann, das auf der Innenseite der Stecknase 32 vorgesehen ist (siehe insbesondere Figur 8).

Sowohl im Bügel 38 der Steckaufnahme 34 als auch in der Stirnseite der Stecknase 32 ist eine Eingriffsmulde 48 vorgesehen, die es einem Bediener erlaubt, das Schnappelement 44 aus einer Sperrposition, die in Figur 8 zu sehen ist, in eine Freigabeposition zu verstellen (in der Richtung eines am Wandelement 14 angebrachten Pfeils), in der das Widerlager 46 freigegeben ist und die Stecknase 32 aus der Steckaufnahme 34 herausgezogen werden kann.

Um ein Modul 12 zu montieren, wird die Stecknase 32 eines Wandelements 14 in die Steckaufnahme 34 eines zweiten Wandelements 14 eingesteckt, bis das Schnappelement 44 hinter dem Widerlager 46 einrastet. Dies ist auch mit dem vierten Wandelement 14 möglich. Dieses wird mit seiner gekrümmten Außenfläche 35 leicht schräg mit seiner Stecknase 32 in die Steckaufnahme 34 der bereits montierten Wandelemente 14 eingesetzt, bis es dort einrastet, und dann in einer Drehbewegung um eine Achse, die durch die gekrümmte Außenfläche 35 der Stecknase 32 definiert ist, mit seiner Steckaufnahme 34 auf die Stecknase 32 des bereits montierten, benachbarten Wandelements 14 aufgeschoben. Sobald das Schnappelement 44 hinter dem Widerlager 46 einrastet, ist das Modul 12 fertig.

Falls das Modul 12 wieder demontiert werden soll, werden nacheinander jeweils ein Schnappelement 44 in die Freigabestellung gebracht und die entsprechende Stecknase 32 aus der Steckaufnahme 34 herausgezogen.

Jedes Wandelement 14 weist in der Nähe des oberen Randes 25 auf der Innenseite etwa mittig eine Verriegelungsöffnung 50 auf, in die ein Riegel eingreifen kann, der Teil eines im Schachtdeckel 20 montierten Verriegelungsmechanismus 52 ist. Die Verriegelungsöffnung 50 kann verwendet werden, wenn ein besonders flach bauender Rahmen auf dem obersten Modul 12 angeordnet wird.

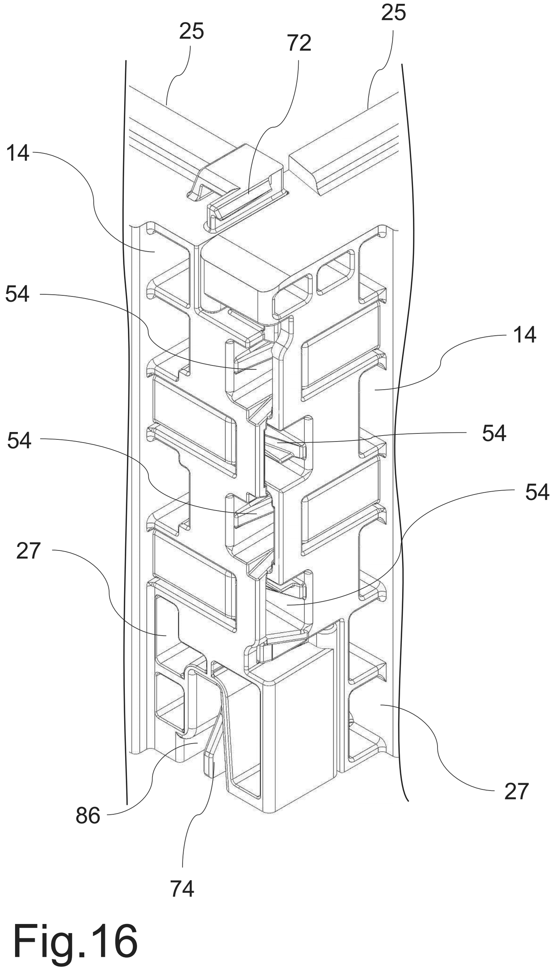

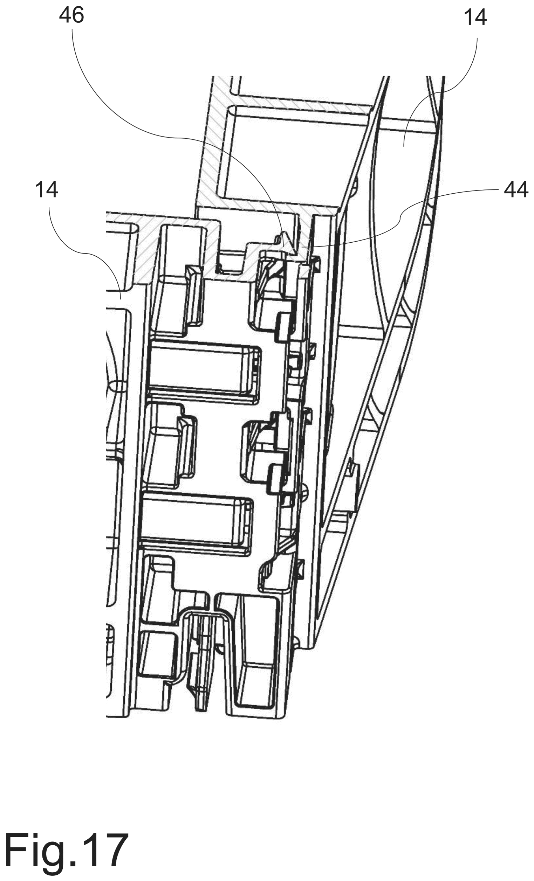

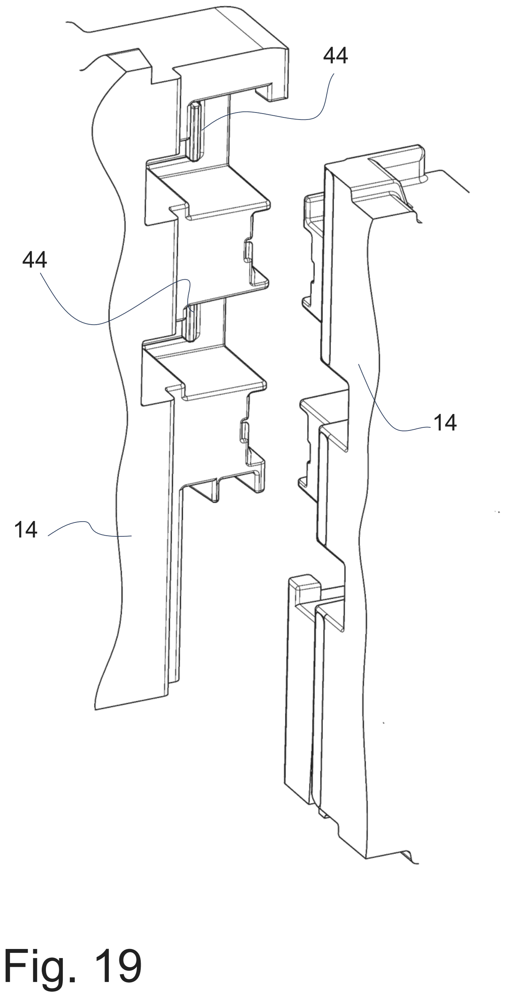

Anhand der Figuren 16 bis 19 wird nachfolgend eine zweite Ausführungsvariante einer Eckverbindung für die Wandelemente 14 beschrieben. Für die von der ersten Ausführungsvariante der Figuren 5 bis 16 bekannten Bauteile und Merkmale werden dieselben Bezugszeichen verwendet, und es wird diesbezüglich auf die obigen Erläuterungen verwiesen.

Der Unterschied zwischen der ersten und der zweiten Ausführungsvariante besteht darin, dass bei der zweiten Ausführungsvariante die Wandelemente 14 mit einer rein translatorischen Bewegung miteinander verbunden werden können.

Bei der zweiten Ausführungsvariante sind die zueinander komplementären Modul-Rastteile aus mehreren Verbindungsblöcken 54 gebildet, die kammartig ineinander eingreifen. Zwischen den Verbindungsblöcken 54 eines Wandelements 14 sind dementsprechend Aufnahmeöffnungen 56 für die Verbindungsblöcke 54 des anderen Wandelements 14 vorgesehen.

Die Verbindungsblöcke 54 sind so ausgeführt, dass jedes Wandelement 14 in einer ausschließlich translatorischen Bewegung an den anderen Wandelementen 14 befestigt werden kann. Dies ist insbesondere bei der Montage des vierten Wandelements 14 eines Moduls 12 wichtig, da eine ausschließlich translatorische Bewegung leicht automatisiert werden kann.

Jeder Aufnahmeöffnung 56 ist ein Schnappelement 44 zugeordnet, das mit einem Widerlager 46 am Verbindungsblock 54 eines anderen Wandelements 14 zusammenwirken kann.

Die Widerlager 46 sind hier mit einer mittigen Nut 47 versehen, die als Führung für ein Entriegelungswerkzeug dient. Das Entriegelungswerkzeug kann von außen eingeschoben werden und beide Schnappelemente 44 gleichzeitig nach außen in eine Freigabeposition verstellen.

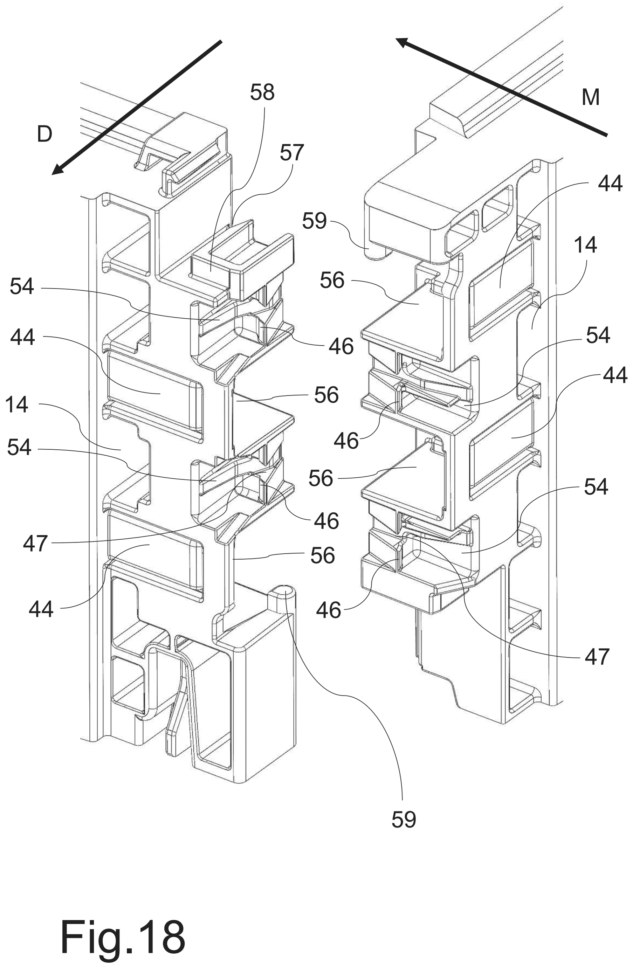

Um das Montieren zu erleichtern, ist an manchen der Verbindungsblöcke 54 eines Wandelements 14 eine Einführschräge 58 vorgesehen, die mit einem zugeordneten Führungsvorsprung 59 der entsprechenden Aufnahmeöffnung 56 des anderen Wandelements 14 zusammenwirken kann. Die Einführschräge 58 und der Führungsvorsprung 59 sind so ausgeführt, dass sie während der Montage miteinander zusammenwirken, aber im vollständig montierten Zustand aneinander vorbeibewegt sind. Dadurch ist es möglich, dass jeder Eckabschnitt in einer Richtung montiert werden kann, aber in einer dazu senkrechten Richtung wieder demontiert werden kann. Dies ist in Figur 18 durch die beiden Pfeile M und D angedeutet.

Der Eckabschnitt kann montiert werden, indem das in Figur 18 rechte Wandelement 14 in der Richtung des Pfeils M auf das in Figur 18 linke Wandelement 14 aufgeschoben wird. Dabei wird die Einführschräge 58 vom Führungsvorsprung 59 geführt. Im vollständig montierten Zustand liegt der Führungsvorsprung 59 innerhalb der Einführschräge 58. Dort ist in einer Richtung etwa senkrecht zur Erstreckungsrichtung der Einführschräge 58 eine Freigabenut 57 ausgebildet, durch die sich der Führungsvorsprung 59 bewegen kann, wenn bei der Demontage das in Figur 18 linke Wandelement 14 in der Richtung des Pfeils D vom rechten Wandelement 14 abgezogen wird.

Auch bei der zweiten Ausführungsvariante sind die Wandelemente 14 einschließlich der Modul-Rastteile 54 so ausgestaltet, dass sie schieberfrei in einem Spritzgusswerkzeug hergestellt werden können.

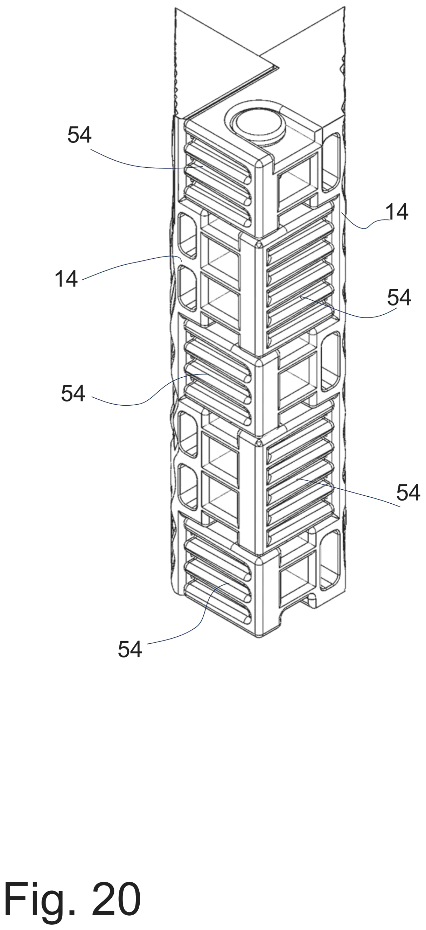

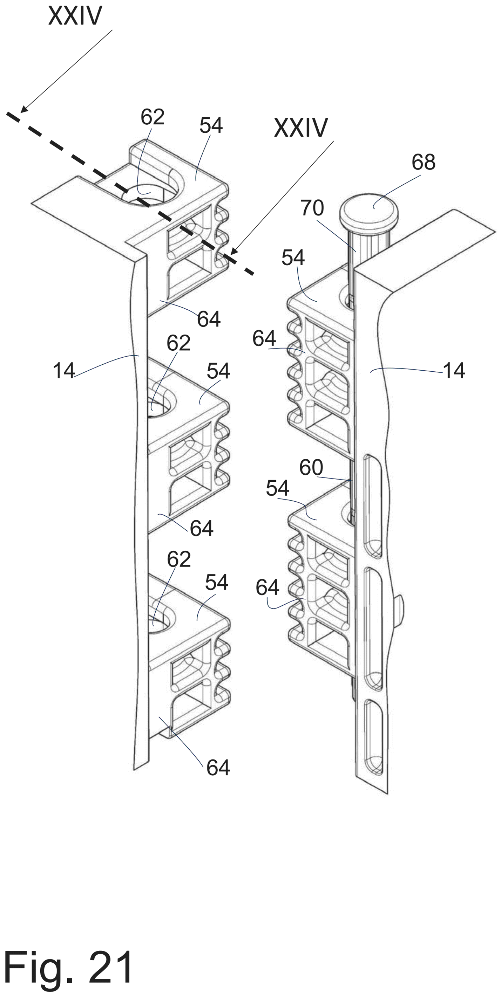

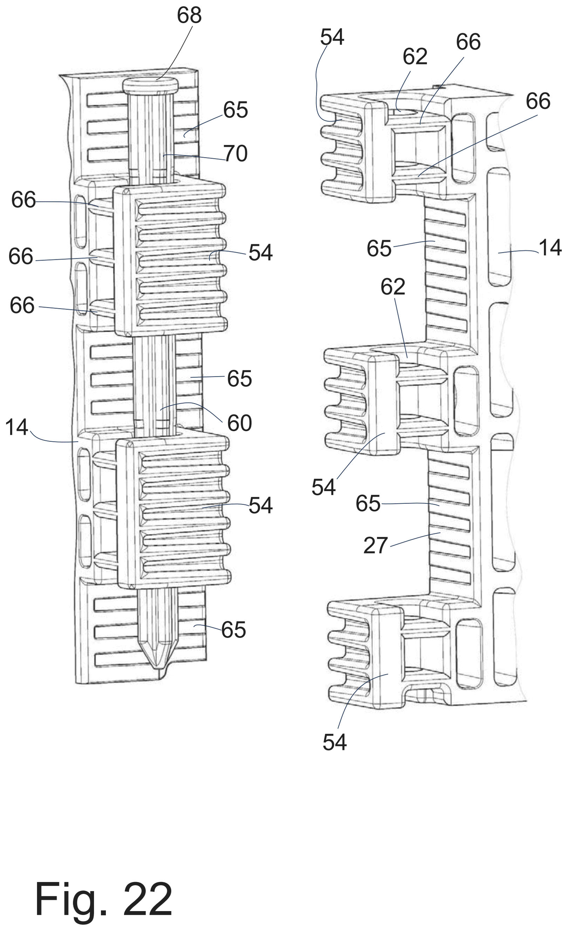

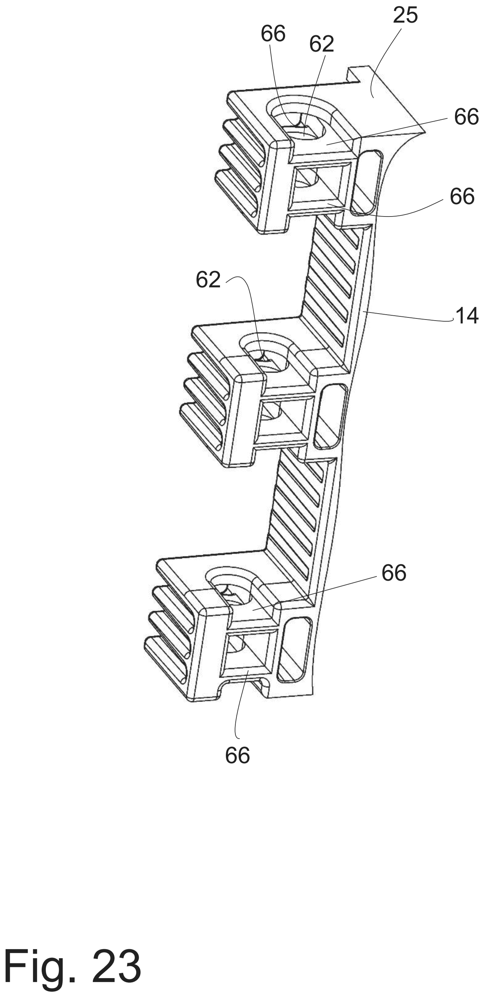

Anhand der Figuren 20 bis 25 wird nachfolgend eine dritte Ausführungsvariante einer Eckverbindung für die Wandelemente 14 beschrieben. Für die von der ersten und der zweiten Ausführungsvariante der Eckverbindung bekannten Bauteile und Merkmale werden dieselben Bezugszeichen verwendet, und es wird diesbezüglich auf die obigen Erläuterungen verwiesen.

Der Unterschied zwischen der dritten Ausführungsvariante einerseits und der ersten und der zweiten Ausführungsvariante andererseits besteht darin, dass bei der dritten Ausführungsvariante die Wandelemente 14 mittels eines separaten Verbindungselements 60 miteinander verbunden werden.

Auch bei der dritten Ausführungsvariante sind die zueinander komplementären Modul-Rastteile aus insgesamt fünf Verbindungsblöcken 54 gebildet. Diese haben im Querschnitt eine rechteckige Form mit drei freien, im Winkel von 90° zueinander angeordneten Seitenflächen.

In der gezeigten Ausführungsvariante werden an einem Ende des Wandelements 14 zwei Verbindungsblöcke 54 und am anderen Ende drei Verbindungsblöcke 54 verwendet. Zählt man die Verbindungsblöcke 54 in einer Reihe durch, sind von den Verbindungsblöcken 54 einer Eckverbindung der erste, der dritte und der fünfte Verbindungsblock 54 einem Wandelement 14 zugeordnet und der zweite und vierte Verbindungsblock 54 dem anderen Wandelement 14 zugeordnet.

Der Vorteil bei dieser Anzahl von Verbindungsblöcken 54 ist, dass bei Belastungen eines Wandelements 14 vertikal relativ zum benachbarten Wandelement 14 unabhängig von der Belastungsrichtung dieselbe Anzahl von Seitenflächen der Verbindungsblöcke 54 zur Lastübertragung zur Verfügung steht, nämlich hier zwei Seitenflächen. Derselbe Vorteil würde sich bei allen anderen 'ungeraden' Kombinationen von Verbindungsblöcken 54 ergeben, also bei einem und zwei Verbindungsblöcken 54, bei drei und vier Verbindungsblöcken 54, etc.

Zur Aufnahme des Verbindungselements 60 weist jeder Verbindungsblock 54 eine durchgehende Öffnung 62 auf, wobei die Öffnungen 62 der Verbindungsblöcke 54 an einem Ende jedes Wandelements 14 konzentrisch zueinander ausgerichtet sind.

Die in Verlängerung der Innenseite jedes Wandelements 14 angeordnete Seitenfläche jedes Verbindungsblocks 54 bildet eine Arretierfläche 64, die jeweils tangential zur gemeinsamen Mittelachse der Öffnungen 62 der Verbindungsblöcke 54 an einem Seitenrand ausgerichtet ist. Alle Arretierflächen 64 befinden sich dabei in demselben Abstand von der Mittelachse. Die Arretierflächen 64 sind dafür vorgesehen und ausgebildet, mit den Seitenflächen 65 an den Seitenrändern des anderen Wandelements 14 zusammenzuwirken.

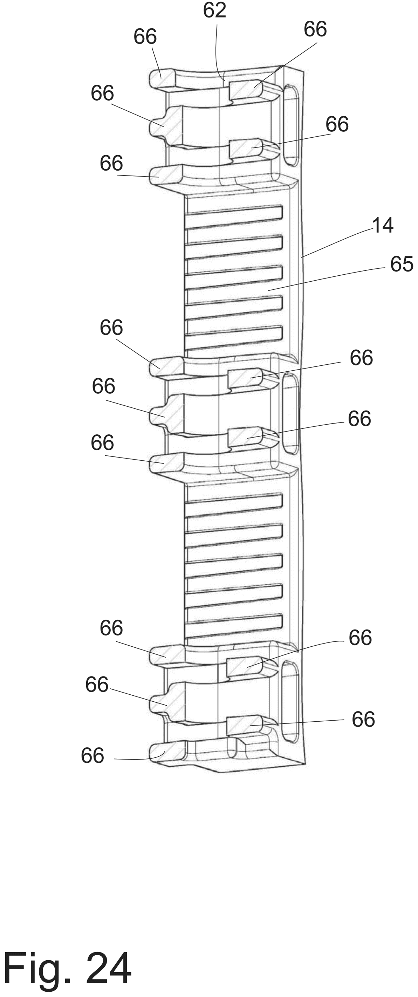

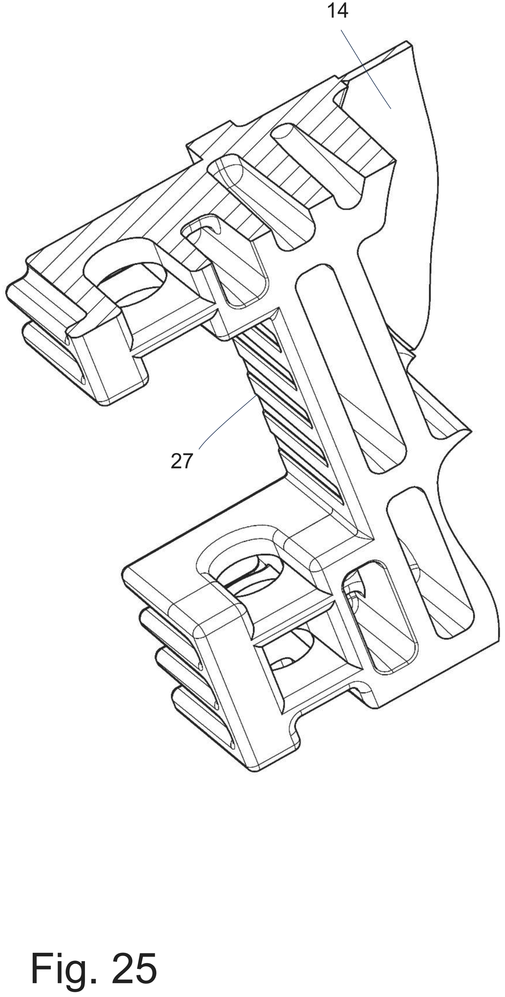

Die Verbindungsblöcke 54 an den beiden Seitenrändern jedes Wandelements 14 sind aus mehreren dünnen Wänden 66 gebildet, die sich abwechselnd von der Außenseite und der Innenseite des Wandelements 14 erstrecken (siehe insbesondere die Figuren 24 und 25). Dies ermöglicht, die Wandelemente 14 zu fertigen, ohne dass Schieber im Spritzgusswerkzeug erforderlich sind.

Um ein Modul 12 zusammenzubauen, werden die Wandelemente 14 so zusammengesetzt, dass die Wandelemente 14 kammartig ineinander eingreifen. Dann wird das Verbindungselement 60 durch die Öffnungen 62 hindurchgeschoben.

Das Verbindungselement 60 hat die Form eines Nagels mit einem Anschlagkopf 68. Angrenzend an den Anschlagkopf 68 hat der Nagel einen Klemmabschnitt 70, der einen Durchmesser hat, der geringfügig größer ist als der Durchmesser des verbleibenden Abschnittes des Verbindungselements 60 bis hin zum freien, vom Anschlagkopf 68 angewandten Ende. Somit kann das Verbindungselement 60 frei durch die Öffnungen 62 geschoben werden, bis der Klemmabschnitt 70 für den letzten kleinen Teil des Einschubweges in die Öffnung 62 des obersten Verbindungsblocks 54 eingedrückt wird.

Die Arretierflächen 64 sind so dimensioniert und angeordnet, dass sie bei eingesetztem Verbindungselement 60 an der zugeordneten Seitenfläche 65 des benachbarten Wandelements 14 anliegen. Dadurch sind die Wandelemente 14 in einem Winkel von 90° zueinander fixiert.

Die Verbindungsblöcke 54 können auch so dimensioniert sein, dass es möglich ist, ein Wandelement 14 in Verlängerung eines zweiten Wandelements 14 mit diesem zu verbinden. In diesem Fall wirkt die von der Mitte der Wandelemente 14 wegweisende Außenfläche der Verbindungsblöcke 54 als Arretierfläche 64.

Indem zwei Wandelemente 14 auf diese Weise in derselben Ebene montiert werden, kann aus identischen Wandelementen 14 ein rechteckiger Schacht 10 mit zwei längeren und zwei kürzeren Seitenwänden 16 aufgebaut werden, beispielsweise mit sechs Wandelementen 14 je Modul 12.

Um die Wandelemente 14 wieder voneinander zu trennen, wird das Verbindungselement 60 aus den Öffnungen 62 entfernt. Hierzu kann auf das freie Ende des Verbindungselements 60 mit einem Dorn oder einem ähnlichen Werkzeug geschlagen werden. Dies ist leicht möglich, da das freie Ende des Verbindungselements 60 im untersten Verbindungsblock 54 freiliegt. Sobald das Verbindungselement 60 so weit herausbewegt ist, dass der Klemmabschnitt 70 nicht mehr innerhalb des obersten Verbindungsblocks 54 liegt, kann das Verbindungselement 60 von Hand herausgezogen werden.

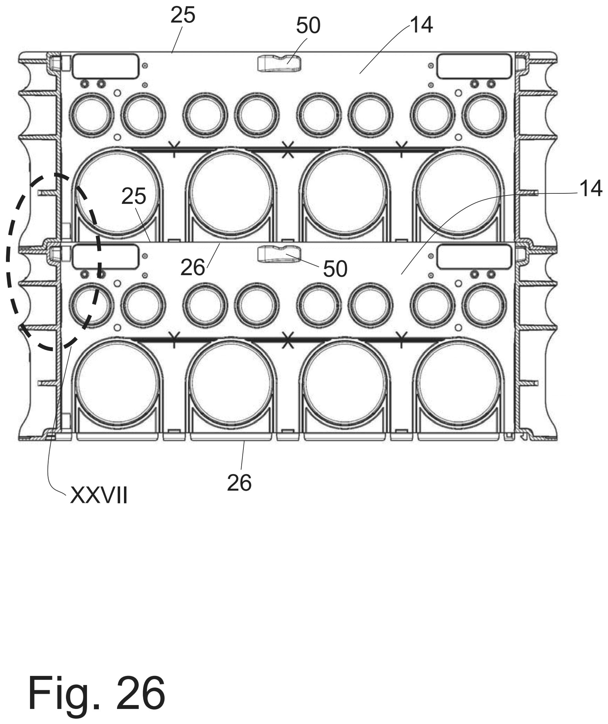

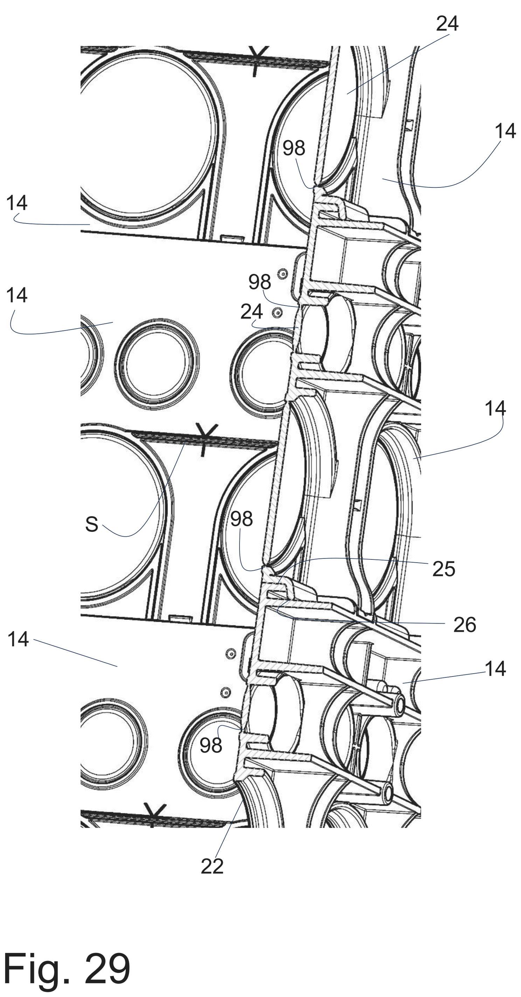

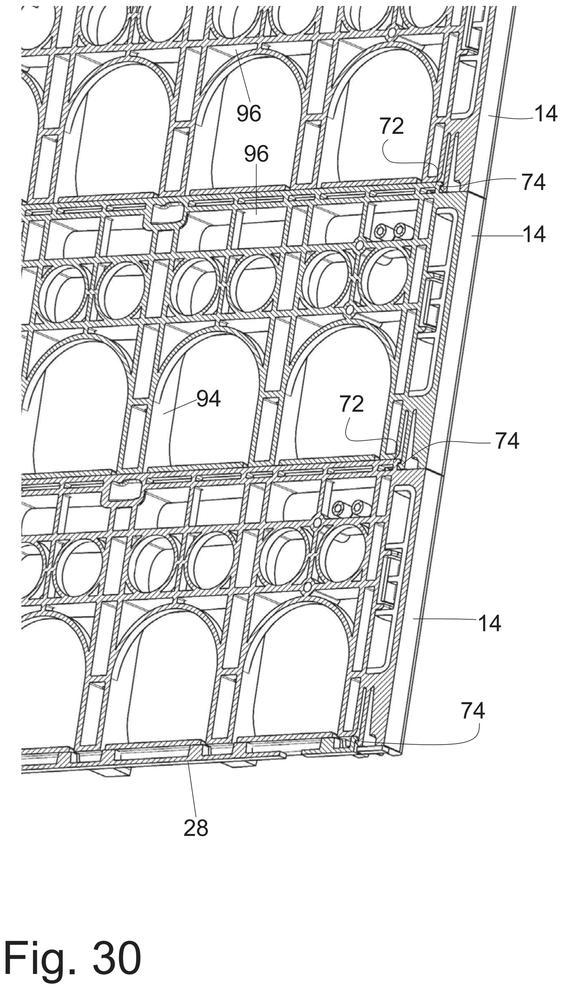

Anhand der Figuren 26 bis 30 wird nachfolgend erläutert, wie die Module 12 in vertikaler Richtung miteinander verbunden werden. Dies gilt unabhängig von der Art und Weise, wie die Wandelemente 14 an den Ecken eines Moduls 12 miteinander verbunden werden, und auch unabhängig davon, ob die Module 12 einen quadratischen Querschnitt oder einen rechteckigen Querschnitt mit zwei längeren und zwei kürzeren Seiten hat.

Die Wandelemente 14 weisen am oberen Rand 25 ein Rastelement 72 und am unteren Rand 26 eine Rastgestaltung 74 auf. Wenn die Module 12 aufeinandergesetzt werden, rastet die Rastgestaltung 74 des unteren Randes 26 des oberen Moduls 12 am Rastelement 72 des oberen Randes 26 des unteren Moduls 12 ein.

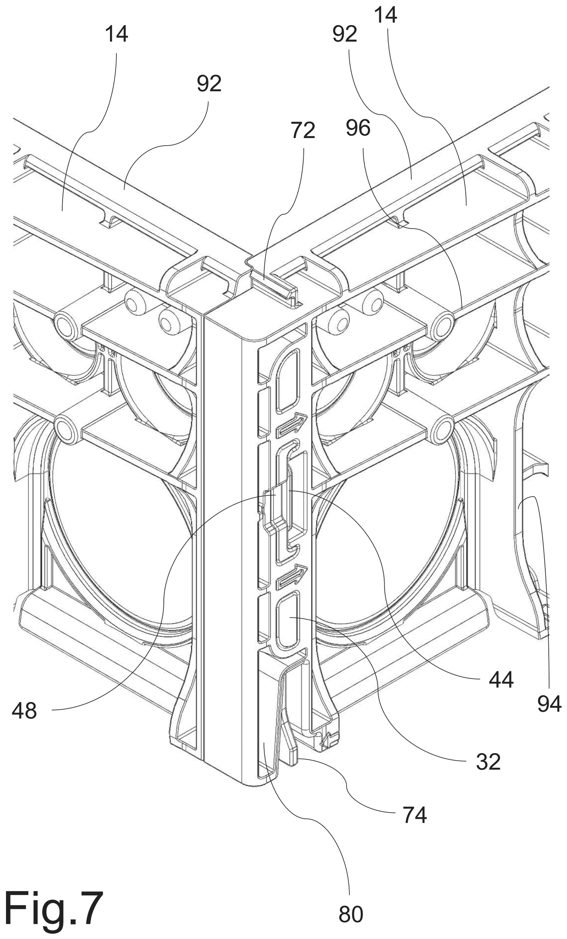

Im gezeigten Ausführungsbeispiel ist das Rastelement 72 eine starre Rastnase (siehe insbesondere die Figuren 7 und 11), die nahe dem oberen Rand 25 seitlich oberhalb der Steckaufnahme 34 seitlich auskragend angeordnet ist.

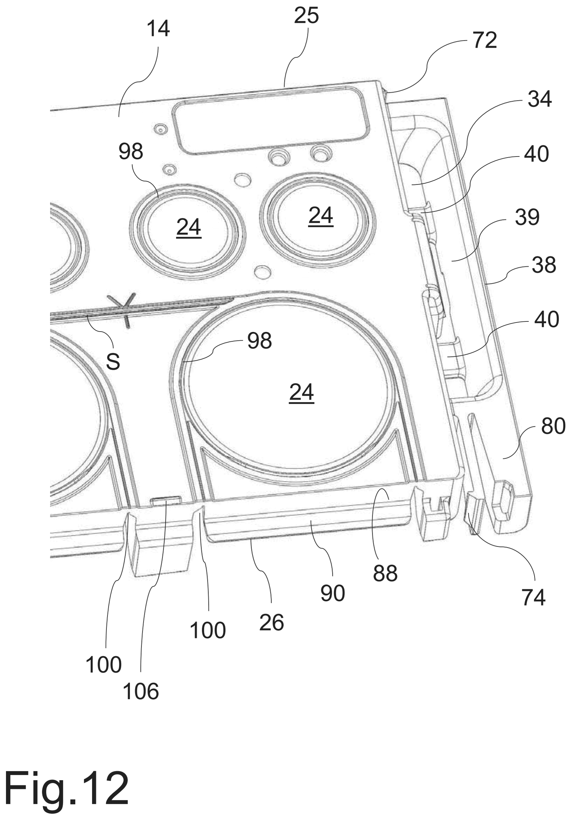

Die Rastgestaltung 74 ist eine elastisch aus einer Raststellung in eine Freigabestellung verformbare Rastlasche (siehe insbesondere die Figuren 11 und 12), die sich vertikal ausgehend vom unteren Ende des Bügels 38 erstreckt und deren freies Ende sich in der Nähe des unteren Randes 26 des Wandelements 14 befindet.

Seitlich außerhalb der Rastgestaltung 74 ist eine Schürze 80 angeordnet, so dass ein Fenster 82 gebildet ist, innerhalb dessen die Rastgestaltung 74 angeordnet ist.

Das Rastelement 72 und die Rastgestaltung 74 sind in vertikaler Richtung übereinander an demselben Ende eines Wandelements 14 angeordnet, und es gibt nur ein Rastelement 72 und eine Rastgestaltung 74 pro Wandelement 14. Im montierten Zustand verbindet die Rastgestaltung 74 eines Wandelements 14 das Modul 12, dessen Teil das entsprechende Wandelement 14 ist, im Eckabschnitt mit dem Rastelement 72 des darunterliegenden Wandelements 14 des darunterliegenden Moduls 12.

Wie in Figur 11 zu sehen ist, liegen sowohl das Rastelement 72 als auch die Rastgestaltung 74 innerhalb der Außenkontur des Wandelements 14. Das Rastelement 72 liegt unterhalb des oberen Randes 25 und innerhalb des Bügels 38, und die Rastgestaltung 74 liegt oberhalb des unteren Randes 26 des Wandelements 14 und innerhalb des Bügels 38. Dadurch sind das Rastelement 72 und die Rastgestaltung 74 vor Beschädigungen beim Transport der Wandelemente 14 geschützt.

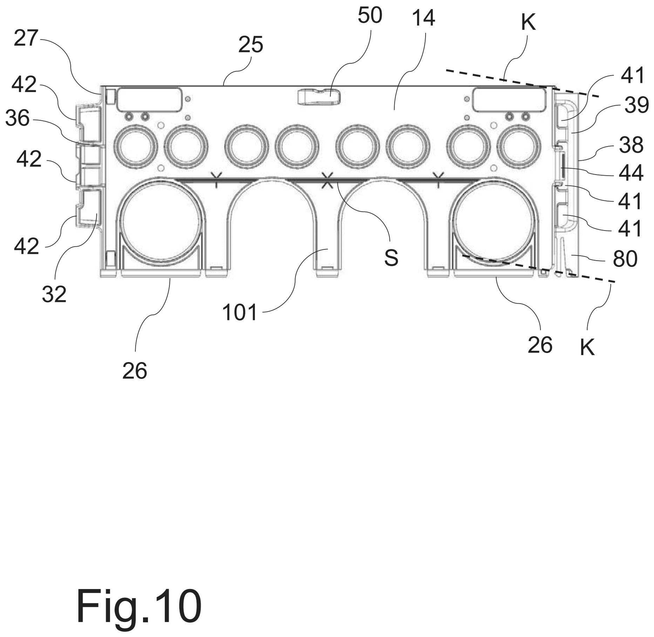

Das Rastelement 72 und die Rastgestaltung 74 weisen Kontaktflächen 84 auf, die miteinander zusammenwirken, wenn die Module 12 aufeinandergesetzt sind. Die Kontaktflächen 84 sind relativ zur Längsrichtung der Rastgestaltung 74 und damit relativ zur vertikalen Richtung, in der eventuelle Zugbelastungen wirken, schräg angestellt (siehe die in Figur 10 zur Verdeutlichung übertrieben schräg dargestellte Ebene K der Kontaktflächen 84), also in einem von 90° verschiedenen Winkel. Die Kontaktflächen 84 sind so schräg angestellt, dass, wenn Zugbelastungen auf die Rastgestaltung 74 wirken, die Rastgestaltung 74 in die Raststellung beaufschlagt wird, also bezogen auf die Figuren 10 und 11 nach links.

Am unteren Rand 26 des Wandelements 14 ist auf der Seite der Rastgestaltung 74 am Rand des Fensters 82 eine Betätigungsaussparung 86 vorgesehen (siehe Figur 8). Dadurch ist die Rastgestaltung 74 gut zugänglich, so dass sie von einem Monteur in die Freigabestellung gedrückt werden kann, wenn die Module 12 voneinander getrennt werden sollen. Neben dem Fenster 82 ist auch ein Pfeil am Wandelement 14 angebracht, was eine intuitive Bedienung unterstützt.

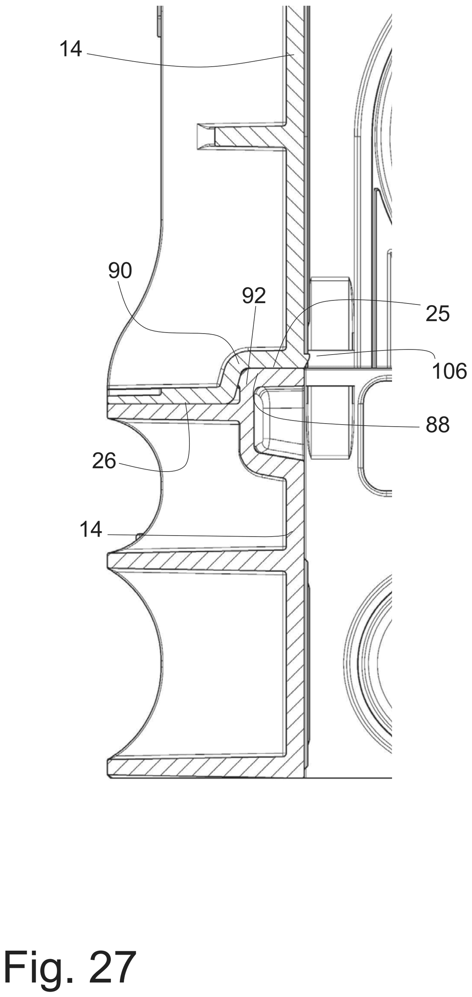

Am unteren Rand 26 ist jedes Wandelement 14 mit einer Auflagefläche 88 versehen (siehe insbesondere Figur 27), an die sich zur Außenseite hin eine Zentrierschürze 90 anschließt. Diese hat eine Höhe von ca. 10 mm und greift im aufeinander montierten Zustand der Module 12 über einen Aufnahmerand 92, der am oberen Rand 25 jedes Wandelements 14 ausgebildet ist. An diesem Aufnahmerand 92 befindet sich seitlich das Rastelement 72.

Wenn die aus den Wandelementen 14 gebildeten Module 12 in einer ersten Konfiguration aufeinandergesetzt werden, wird die Auflagefläche 88 auf den Aufnahmerand 92 aufgesetzt. Dadurch ergibt sich eine Überlappung des oberen Abschnittes des unteren Wandelements 14 mit dem unteren Abschnitt des oberen Wandelements 14, so dass das Rastelement 72 und die Rastgestaltung 74 miteinander in Eingriff gelangen können, obwohl beide innerhalb der Außenkontur der Wandelemente 14 angeordnet sind.

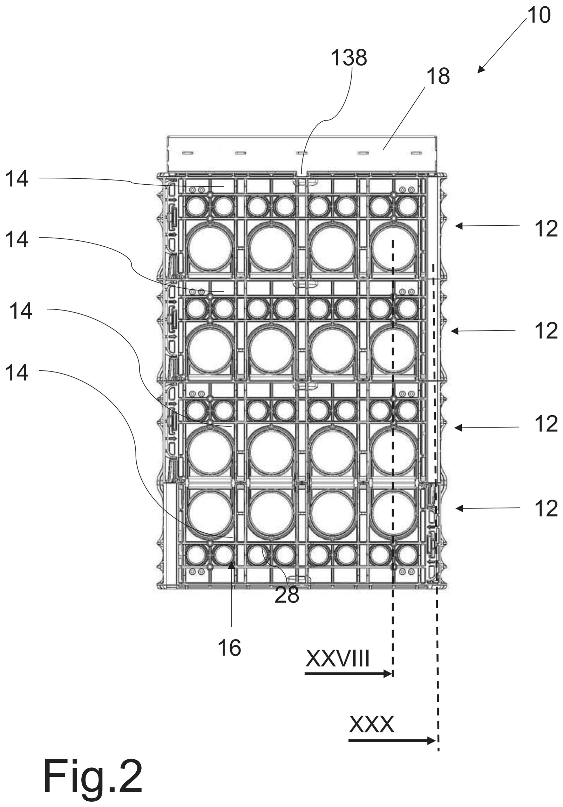

Die erste Konfiguration ist beispielsweise in Figur 2 zu sehen für die Verbindung zwischen dem obersten Modul 12 und dem zweitobersten Modul 12 sowie die Verbindung zwischen dem zweitobersten Modul 12 und dem darunterliegenden Modul 12. Die erste Konfiguration ist auch gezeigt in Figur 4 für alle dort verwendeten Module 12.

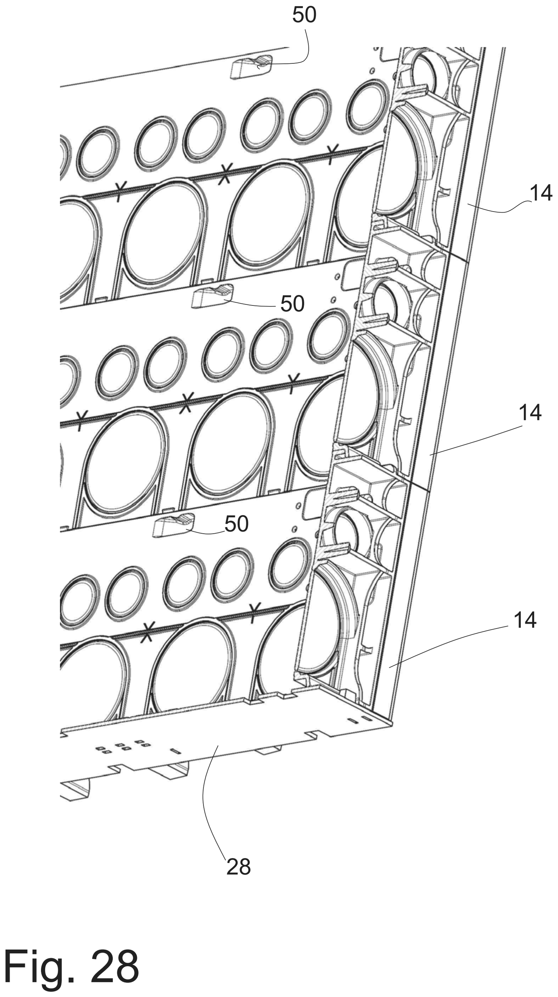

Die Rastgestaltungen 74 der Wandelemente 14 des untersten Moduls 12 eines Schachts 10 können auch dazu verwendet werden, die Bodenplatte 28 anzubringen (siehe Figur 28). Die Bodenplatte 28 ist mit Rastelementen versehen, die denen entsprechen, die am oberen Rand 25 der Wandelemente 14 angeordnet sind.

Die Bodenplatte ist auch mit Rasthaken versehen, die an der Unterseite des untersten Moduls angreifen können.

Wenn auf den Schachtdeckel 20 vertikale Lasten wirken, werden diese in den Rahmen 18 und von dort in die Wandelemente 14 eingeleitet. Die Kräfte werden in den Wandelementen 14 nach unten weitergeleitet. Die Wandelemente 14 weisen zu diesem Zweck zum einen Wandabschnitte auf, die in vertikaler Richtung durchgehend sind. Zum anderen sind die Wandelemente 14 mit sich vertikal erstreckenden Verstärkungsstegen 94 versehen.

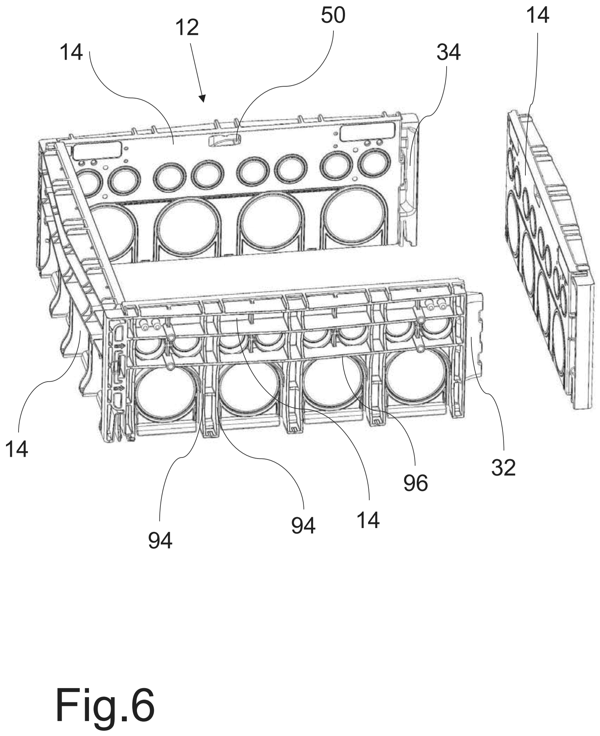

Auf die Seitenwände 16 des Schachts 10 wirken zusätzlich zu den vertikalen Lasten auch Lasten in einer Richtung, die senkrecht zur Erstreckungsrichtung der Seitenwände 16 von außen nach innen verläuft. Diese Lasten resultieren hauptsächlich, wenn der Schacht 10 eingegraben ist, vom Erddruck. Um diese Lasten abfangen zu können, sind horizontal verlaufende Versteifungsrippen 96 vorgesehen. Diese haben in der Mitte jedes Wandelements 14 ihre größte Höhe (siehe beispielsweise Figur 6).

Damit Leitungen in das Innere des Schachts 10 eingeführt werden können, ist jedes Wandelement 14 mit mehreren der Durchtrittsöffnungen 22, 23 versehen.

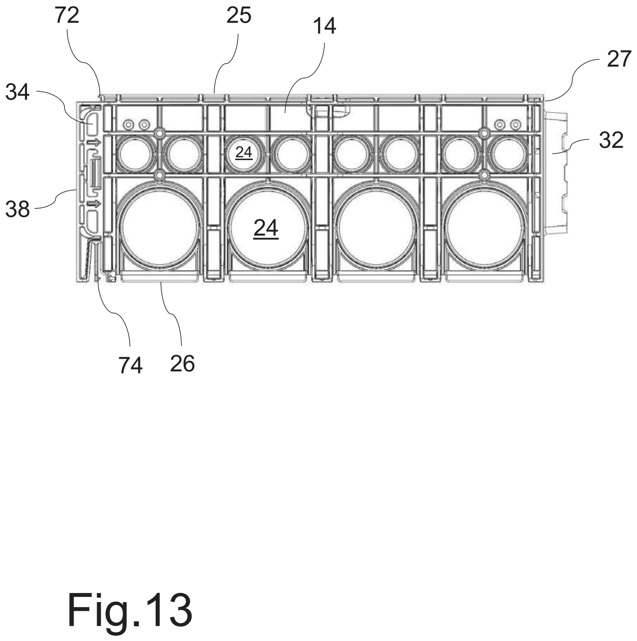

Im gezeigten Ausführungsbeispiel weist jedes Wandelement 14 (siehe beispielsweise Figur 13) entlang seinem unteren Rand 26 eine Reihe von großen kreisförmigen Durchtrittsöffnungen 22 auf, die hier einen Durchmesser von 110 mm haben.

Über der Reihe der großen Durchtrittsöffnungen 22 ist eine Reihe von kleinen kreisförmigen Durchtrittsöffnungen 23 angeordnet, die hier einen Durchmesser von 50 mm haben. Dabei sind in einem vertikalen Segment, in dem eine große Durchtrittsöffnung 22 angeordnet ist, zwei kleine Durchtrittsöffnungen 23 angeordnet.

Über der Reihe der kleinen Durchtrittsöffnungen 23 befindet sich ein Wandabschnitt, in dem keine Durchtrittsöffnungen vorgesehen sind. Dies ist im Hinblick auf die Verteilung von vertikal eingeleiteten Lasten vorteilhaft.

Jede Durchtrittsöffnung 22, 23 ist im Auslieferungszustand der Wandelemente 14 von einem Deckel 24 verschlossen, der über eine Sollbruchstelle 98 mit dem sie umgebenden Wandabschnitten verbunden ist. **Im** Bereich der Sollbruchstelle 98 beträgt die Wandstärke in der Größenordnung von 2,0 mm.

Während der Installation des Schachts 10 können die Deckel 24 dort aus der Seitenwand 16 entfernt werden, wo eine Leitung in den Schacht 10 eingeführt werden soll. Man kann die Deckel 24 zum Beispiel mit einem Hammer herausschlagen.

Ein besonderes Merkmal der Wandelemente 14 ist, dass im Bereich der großen Durchtrittsöffnungen 22 der untere Rand 26 des Wandelements 14 entfernt werden kann. Dadurch wird eine nach unten offenen Durchtrittsöffnung 22 geschaffen, mit der Leitungen überbaut werden können. "Überbaut" bedeutet, dass der Schacht 10 von oben auf eine bereits verlegte Leitung gestellt werden kann und die Leitung nicht seitlich in einen bereits in eine Grube gestellten Schacht 10 eingeführt werden muss.

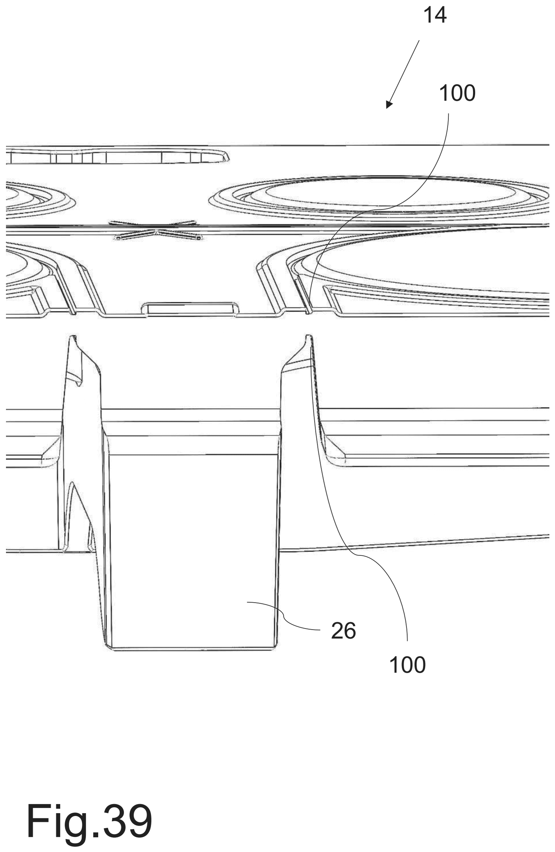

Um das Wandelement 14 vor Ort flexibel an die jeweiligen Anforderungen anpassen zu können, erstrecken sich ausgehend vom unteren Rand 26 des Wandelements 14 zwei Schwächungszonen 100 hin zur entsprechenden Durchtrittsöffnung 22. Die Schwächungszonen 100 laufen tangential in die Sollbruchstelle 98 der Durchtrittsöffnung 22 ein (siehe insbesondere Figur 12 und Figur 39).

Die Wandstärke in den Schwächungszonen 100 beträgt etwa 3 mm.

Außerhalb der Schwächungszonen 100 und außerhalb der Sollbruchstellen 98 beträgt die Wandstärke der Wandelemente 14 etwa 6 mm.

Um zu verhindern, dass der untere Rand 26 eines Wandelements 14 zwischen zwei Schwächungszonen 100 versehentlich herausgebrochen wird, wenn der Deckel 24 der entsprechenden Durchtrittsöffnung 22 entfernt wird, sind die Sollbruchstellen 98 der Deckel 24 der großen Durchtrittsöffnungen 22 in ihrer dem unteren Rand 26 zugewandten Seite mit einer nochmals verringerten Wandstärke ausgeführt. Im Ausführungsbeispiel beträgt die Wandstärke etwa 0,6 mm anstelle der sonst vorhandenen 2 mm.

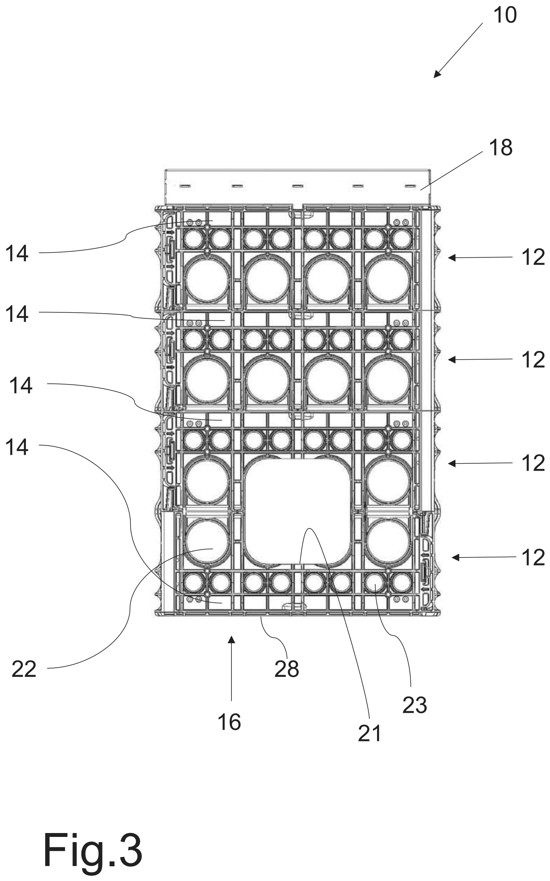

Die Module 12 können auch in einer zweiten Konfiguration aufeinandergesetzt werden, in der der untere Rand 26 eines Moduls 12 auf den unteren Rand 26 eines anderen Moduls 12 aufgesetzt wird, der dadurch zum auf der oberen Seite des unteren Moduls 12 angeordneten Rand wird. Die zweite Konfiguration ist in Figur 3 für das unterste Modul 12 und das zweitunterste Modul 12 gezeigt; das unterste Modul 12 ist hier "umgekehrt" montiert.

Wenn zwei Module 12 in der zweiten Konfiguration miteinander verbunden werden, kann die rechteckige große Durchtrittsöffnung 21 erhalten werden. Hierfür wird in einem ersten Schritt bei zwei nebeneinanderliegenden großen Durchtrittsöffnungen 22 der untere Rand 26 entfernt (siehe Figur 10). Dann wird der zwischen den Durchtrittsöffnungen 22 verbleibende Mittelsteg 101 entfernt. Hierfür ist eine Sägelinie S vorgegeben, entlang der ein Monteur mit beispielsweise einer Stichsäge sägen kann.

Wenn der Mittelsteg 101 entfernt ist, ist die eine Hälfte der rechteckigen Durchtrittsöffnung 21 erhalten. An einer entsprechenden Stelle eines zweiten Moduls 12 werden ebenfalls der untere Rand 26 bei zwei großen Durchtrittsöffnungen 22 und der Mittelsteg 101 der Sägelinie S entfernt.

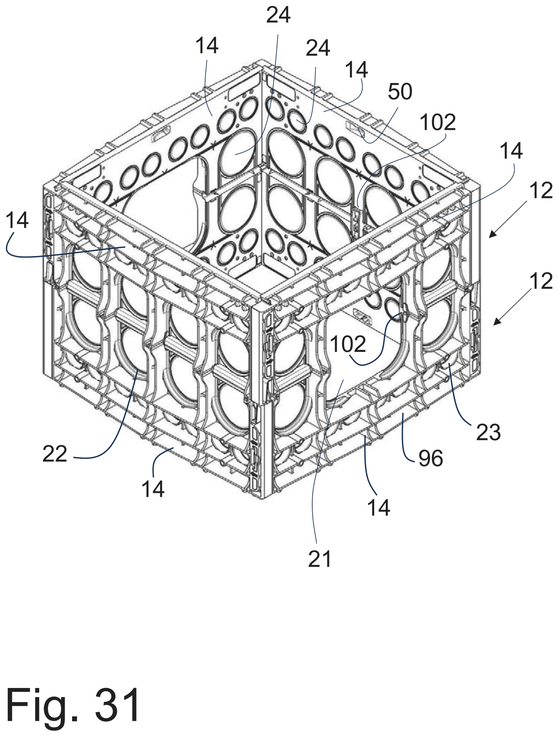

Wenn dann die beiden entsprechend vorbereiteten Module 12 in der zweiten Konfiguration miteinander verbunden werden, wird die große rechteckige Durchtrittsöffnung 21 erhalten, wie in Figur 31 zu sehen ist. Diese hat Abmessungen von etwa 260 mm x 260 mm.

Die große Durchtrittsöffnung 21 kann nicht nur mittig an einer Seitenwand 16 des Schachts 10 ausgebildet werden, sondern auch auf der rechten oder linken Seite. Es ist auch möglich, zwei große Durchtrittsöffnungen 21 nebeneinander vorzusehen. Hierfür müssen dann die beiden in Figur 10 mit "Y" markierten Mittelstege 101 entfernt werden.

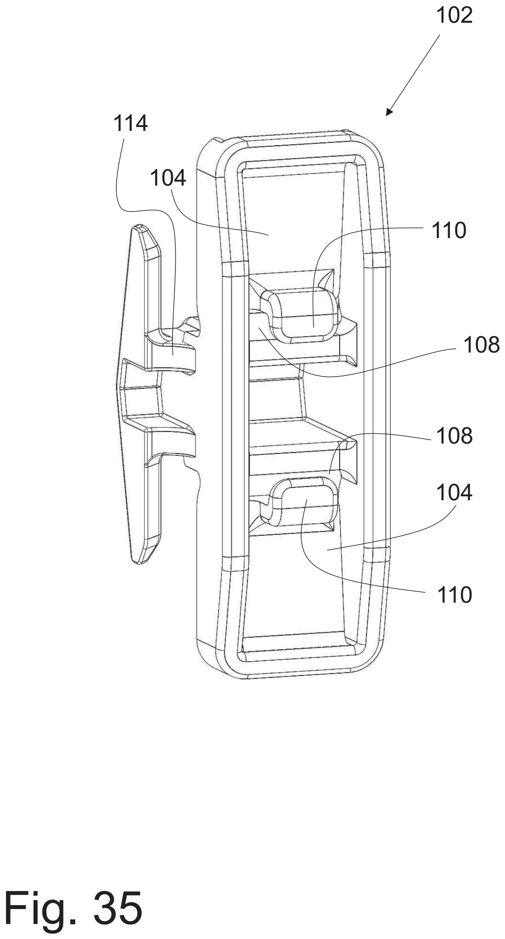

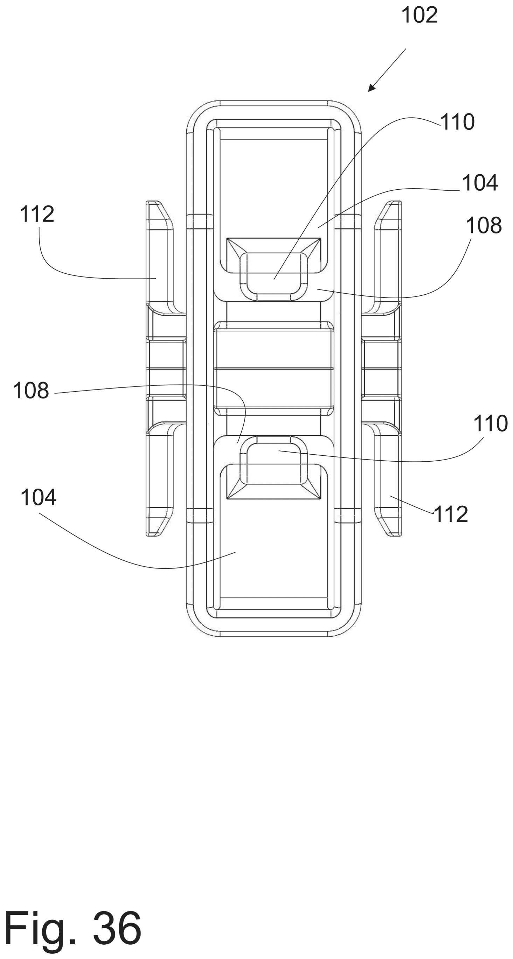

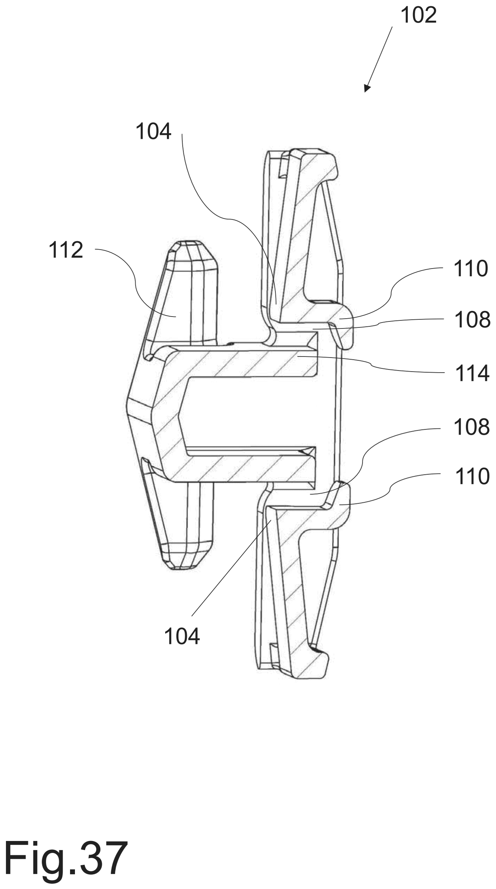

Um zwei Module 12 in der zweiten Konfiguration miteinander zu verbinden, sind separate Verbinderteile 102 vorgesehen. Diese sind in den Figuren 35 bis 37 gezeigt.

Das Verbinderteil 102 ist hier als Verbindungsclips ausgeführt.

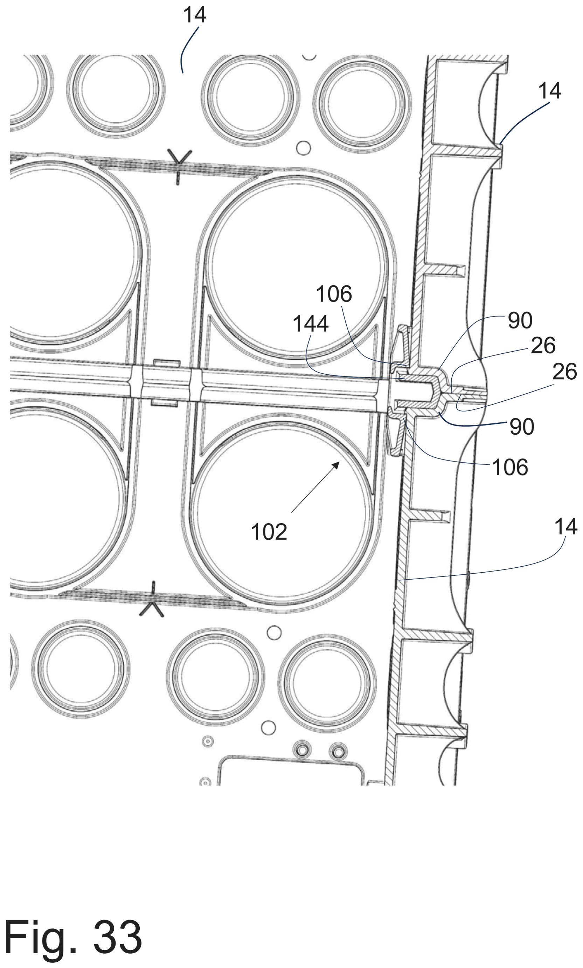

Jedes Verbinderteil 102 weist zwei Verbindungslaschen 104 auf, die mit Verbindungsvorsprüngen 106 (siehe die Figuren 27 und 33) zusammenwirken, die benachbart zum unteren Rand 26 der Wandelemente 14 angeordnet sind. Die Verbindungslaschen 104 sind dabei geschützt innerhalb von fensterartigen Aussparungen 108 angeordnet.

Jede Verbindungslasche 104 ist mit einem Greifhaken 110 versehen, der es einem Monteur ermöglicht, die Verbindungslaschen 104 in eine Freigabestellung zu ziehen, wenn die Module 12 voneinander getrennt werden sollen.

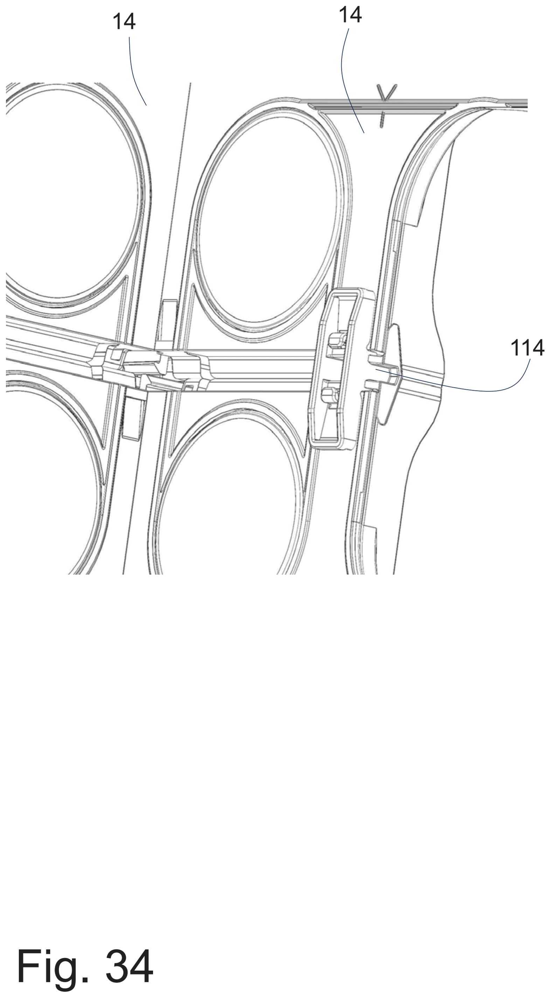

Die Verbindungslaschen 104 sind im montierten Zustand auf der Innenseite der Module 12 angeordnet. Um die Module 12 relativ zueinander zu führen, weist das Verbinderteil 102 zwei Haltestege 112 auf, die sich im montierten Zustand auf der Außenseite der Module 12 befinden (siehe Figur 34). Innenseitig werden die Module 12 vom Mittelabschnitt 114 des Verbinderteils 102 geführt, der im Freiraum zwischen zwei einander zugewandten Zentrierschürzen 90 liegt (siehe Figur 33).

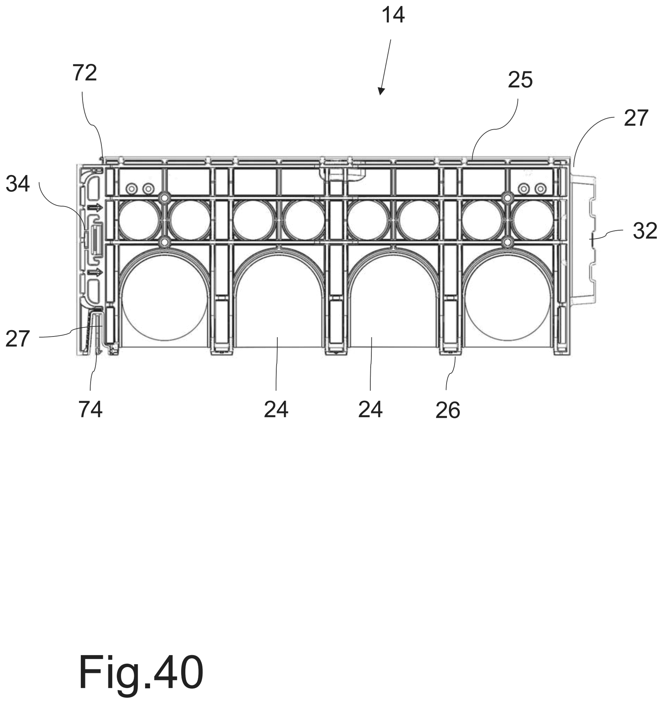

Anhand der Figuren 39 bis 42 wird nachfolgend ein Wandelement 14 für einen Schacht 10 gemäß einer dritten Ausführungsform beschrieben. Für die von der ersten und der zweiten Ausführungsform bekannten Bauteile und Merkmale werden dieselben Bezugszeichen verwendet, und es wird diesbezüglich auf die obigen Erläuterungen verwiesen.

Der Unterschied zwischen dem Wandelement 14 der ersten und der zweiten Ausführungsform und dem Wandelement 14 der Figuren 39 bis 42 besteht darin, dass beim Wandelement 14 der Figuren 39 bis 42 am unteren Rand 26 keine Zentrierschürze 90 vorgesehen ist, sondern nur ein gerader Wandabschnitt.

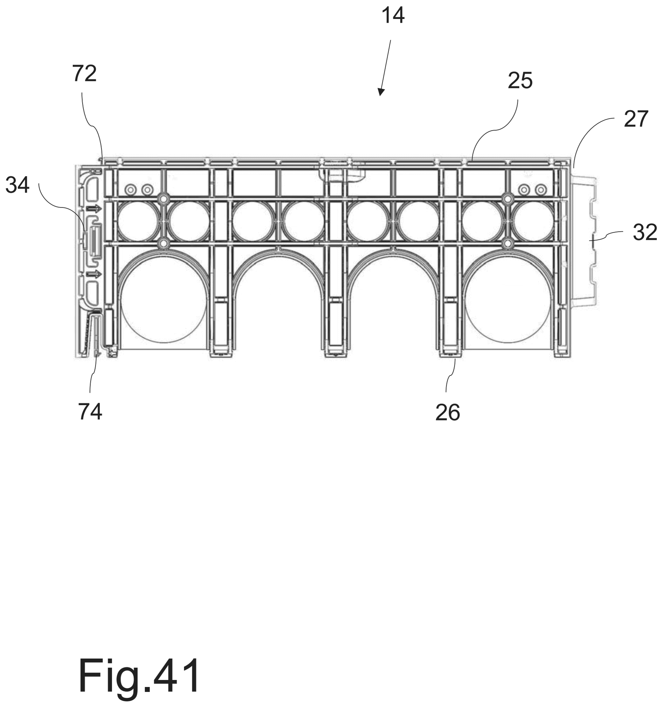

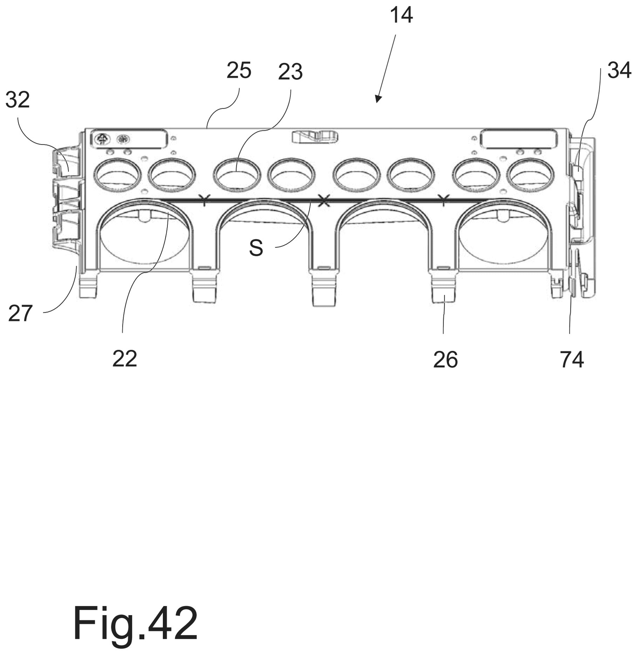

Wie in Figur 42 zu sehen ist, sind bei diesem Wandelement 14 drei unterschiedliche Durchtrittsöffnungen vorgesehen, nämlich kleinere Durchtrittsöffnungen 23 und darunter größere Durchtrittsöffnungen 22, von denen einige zum unteren Rand 26 des Wandelements 14 hin geöffnet sind, wenn ein die Durchtrittsöffnungen 22 im Auslieferungszustand verschließender Deckel 24 entfernt ist (siehe Figur 41).

Auch hier kann die zwischen zwei größeren Durchtrittsöffnungen 22 liegende Mittelsteg 101 entfernt werden, um entweder eine breitere Durchtrittsöffnung 22 zu schaffen, die am unteren Rand 26 geöffnet ist und mit der Leitungen überbaut werden können, oder eine sehr große Durchtrittsöffnung 21 zu schaffen, wenn ein unteres Modul 12 umgekehrt am darüberliegenden Modul 12 befestigt wird.

Alle hier beschriebenen Wandelemente 14 können auch bei dem Schacht 10 der zweiten Ausführungsform verwendet werden, indem zwei der vier Wandelemente 14 eines Moduls 12 länger ausgeführt werden als die anderen beiden. Alle anderen Merkmale hinsichtlich der Verbindung der Wandelemente 14 an den Ecken eines Moduls 12, der Verbindung der Module 12 miteinander und der verschiedenen Durchtrittsöffnungen 21, 22, 23 können bei allen Ausführungsformen verwendet werden.

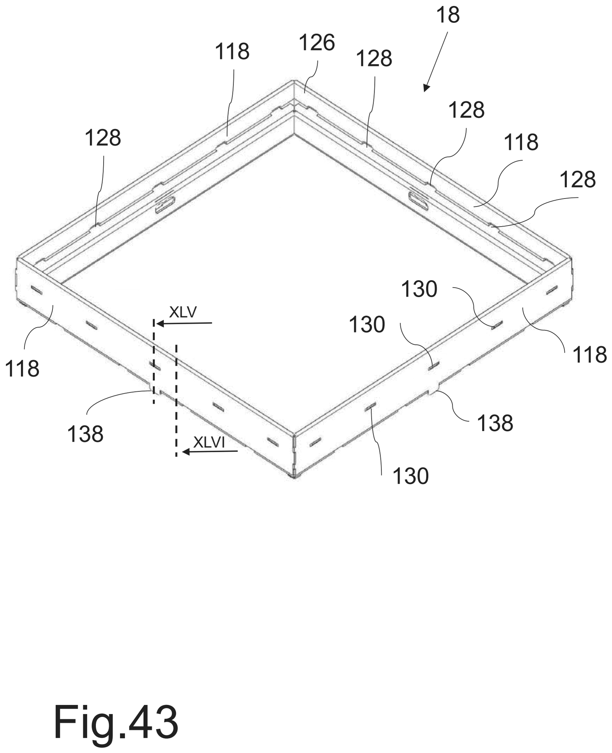

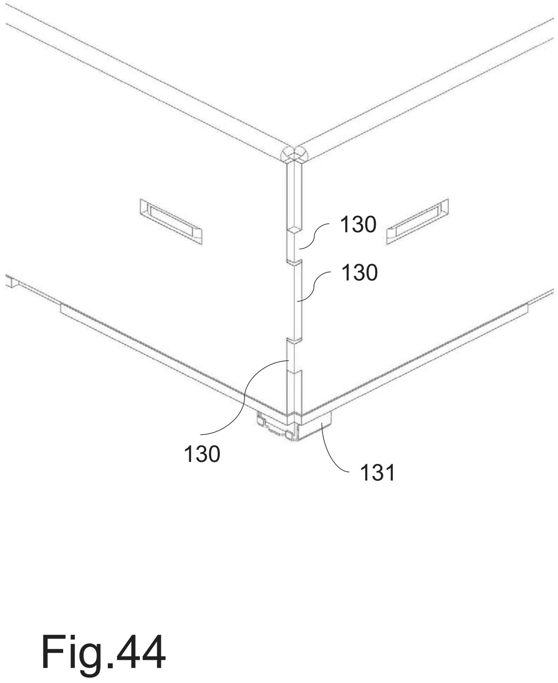

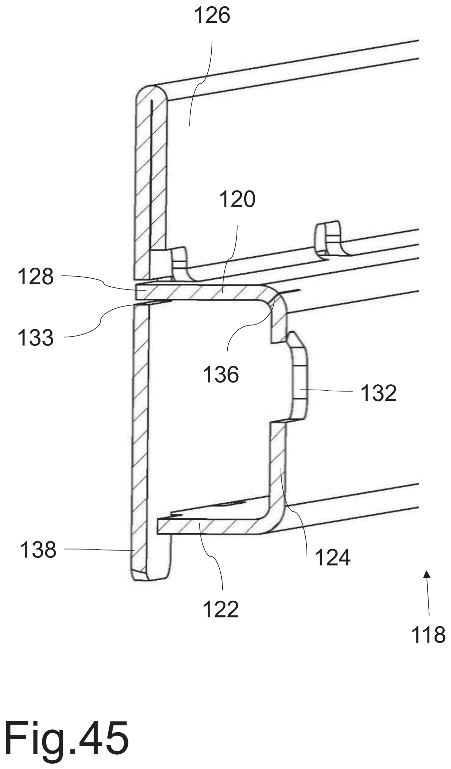

Anhand der Figuren 43 bis 46 wird nachfolgend der Rahmen 18 erläutert, der auf dem obersten Modul 12 eines Schachts 10 angeordnet ist.

Der Rahmen 18 weist mehrere miteinander verbundene Segmente 118 auf, die jeweils eine Seite des Rahmens 18 bilden. Beim quadratischen Rahmen 18 für den Schacht 10 der ersten Ausführungsform haben alle Segmente 118 dieselbe Länge. Beim rechteckigen Rahmen 18 für den Schacht 10 der zweiten Ausführungsform haben zwei der Segmente 118 eine größere Länge als die anderen.

Jedes Segment 118 ist ein Blechbiegeteil, das einen hohlen Lastaufnahmequerschnitt aufweist, der auf der Oberseite einen Aufnahmeschenkel 120 aufweist, der dafür vorgesehen ist, einen Schachtdeckel aufzunehmen, und auf der Unterseite einen Abstützschenkel 122, der dafür vorgesehen ist, sich auf dem oberen Rand 25 des Schachts 10 abzustützen, genauer gesagt auf dem Aufnahmerand 92.

Der Abstützschenkel 122 und der Aufnahmeschenkel 120 sind auf der Innenseite des Segments 118 durch einen Innenschenkel 124 miteinander verbunden.

An den Aufnahmeschenkel 120 schließt sich eine Schürze 126 an, die zur Führung des Schachtdeckels 20 dient, wenn dieser auf dem Aufnahmeschenkel 120 abgesetzt ist. Die Schürze 126 ist gebildet durch zwei aufeinander gefaltete Blechlagen. Vom Falz aus erstreckt sich die äußere Blechlage nach unten bis hin zum Abstützschenkel 122, so dass sie den Außenschenkel des Lastaufnahmequerschnittes bildet.

Zur Versteifung ist der Aufnahmeschenkel 120 mit mehreren Abstütznasen 128 versehen, die in Aussparungen 130 in der äußeren Blechlage hineinragen. Dadurch werden Lasten, die auf den Aufnahmeschenkel 120 wirken, zum Teil direkt in die äußere Blechlage und von dort in den Abstützschenkel 122 abgetragen und müssen nicht von der Schürze 126 aufgenommen werden. Der andere Teil der Lasten wird vom Innenschenkel 124 auf den Abstützschenkel 122 übertragen.

Der Abstützschenkel 122 leitet vertikale Lasten in den Aufnahmerand 92 der Wandelemente 14 ein und damit unmittelbar vertikal in den Bereich der Wandelemente 14, die die höchste Festigkeit haben.

Unterhalb des Aufnahmerandes 92 erstreckt sich die (abgesehen von geöffneten Durchtrittsöffnungen 22) geschlossene Wand des Wandelements 14 nach unten hin zum unteren Rand 26. Von dort können die wirkenden Kräfte wiederum unmittelbar vertikal weitergeleitet werden. Die Versteifungsstege 94 steigern dabei die Festigkeit gegen vertikale Lasten.

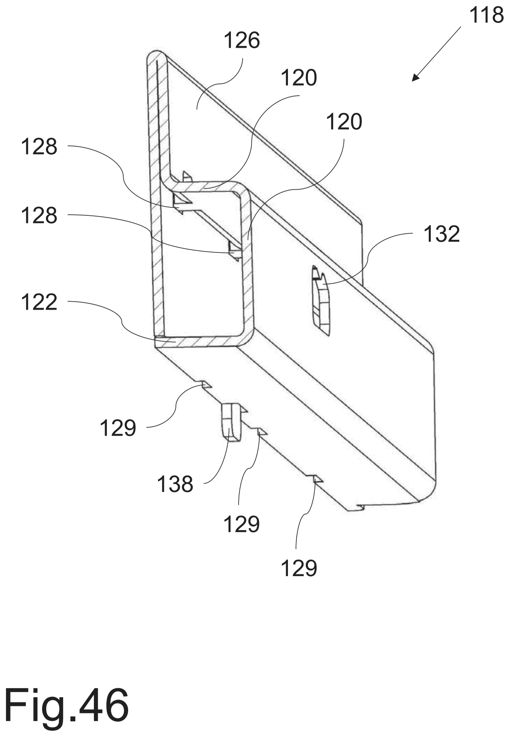

Die äußere Blechlage und der Abstützschenkel 122 können miteinander verschweißt sein. In Figur 46 sind mehrere Schweißstellen 129 schematisch gezeigt.

Abweichend von der gezeigten Ausführungsform könnte auf der Außenseite des Rahmen 18 geschweißt werden.

Bei der gezeigten Ausführungsform steht die äußere Blechlage auf dem Abstützschenkel 122 auf, der sich bis hin zum Außenrand des Rahmens 18 erstreckt.

Der Abstützschenkel 122 könnte so weit nach außen gezogen werden, dass sich auf ihm, wenn der Schacht 10 eingebaut ist, die obere Lage des den Schacht 10 umgebenden Erdreichs bzw. der Bodenbelag (Asphalt, Beton, etc.) aufliegt, so dass eine Aushebesicherung für den Rahmen 18 geschaffen ist.

Die Aushebesicherung kann auch dadurch geschaffen werden, dass die äußere Blechlage länger ausgeführt ist als in den Figuren 43 bis 46 gezeigt und ihr Rand vom Lastaufnahmeabschnitt weg nach außen abgebogen ist.

Alternativ zur gezeigten Ausführungsform könnte der Abstützschenkel 122 um die Stärke der äußeren Blechlage kürzer ausgeführt werden, und die äußere Blechlage kann um die Stärke des Abstützschenkels 122 länger ausgeführt werden. **In** diesem Fall liegt der Stoß zwischen der äußeren Blechlage und dem Abstützschenkel 122 auf der Unterseite des Rahmens.

Jedes Segment 118 besteht aus einem einzigen Zuschnitt aus Stahlblech mit einer Dicke von ca. 3 mm.

Die einzelnen Segmente 118 werden separat voneinander hergestellt und miteinander in den Ecken des Rahmens 18 verschweißt. Um die Segmente 118 relativ zueinander vor dem Verschweißen richtig positionieren zu können, weisen die Enden der Segmente 118 eine Führungslasche 133 bzw. zwei Führungslaschen 133 auf, so dass die eine Führungslasche 133 eines Segments 118 zwischen den beiden Führungslaschen 133 des benachbarten Segments 118 aufgenommen werden kann.

Es ist auch denkbar, alle Segmente 118 gemeinsam aus einem einzigen Zuschnitt herzustellen, der an drei Ecken um 90° gebogen wird und an der vierten Ecke verschweißt wird, so dass der geschlossene Rahmen 18 erhalten wird.

Im Bereich der Ecken sind Aufnahmeöffnungen für eine Käfigmutter 131 vorgesehen, die Teil eines Höhenverstellmechanismus ist.

Weiterhin weisen mindestens zwei der Segmente 118 jeweils eine Verriegelungsöffnung 132 auf, die im Innenschenkel 124 ausgebildet ist. In die Verriegelungsöffnung 132 kann ein Riegel eingreifen, der Teil des im Schachtdeckel 20 montierten Verriegelungsmechanismus 52 ist.

Um zu gewährleisten, dass der Innenschenkel 124 sich beim Abkanten im Bereich der Verriegelungsöffnung 132 nicht verformt, ist im Aufnahmeschenkel 120 am Übergang zum Innenschenkel 124 ein Einschnitt 136 über die Länge ausgebildet ist, über die sich auch die Verriegelungsöffnung 132 erstreckt.

Bei der in den Figuren gezeigten Ausführungsform ist die äußere Blechlage an ihrem unteren Rand mit mindestens einer und vorzugsweise mehreren Zentriernasen 138 versehen. Diese stellen Zentriergestaltungen dar, die mit einer komplementären Zentriergestaltung zusammenwirken, die am Schacht 10 vorgesehen ist, genauer gesagt an den Wandelementen 14.

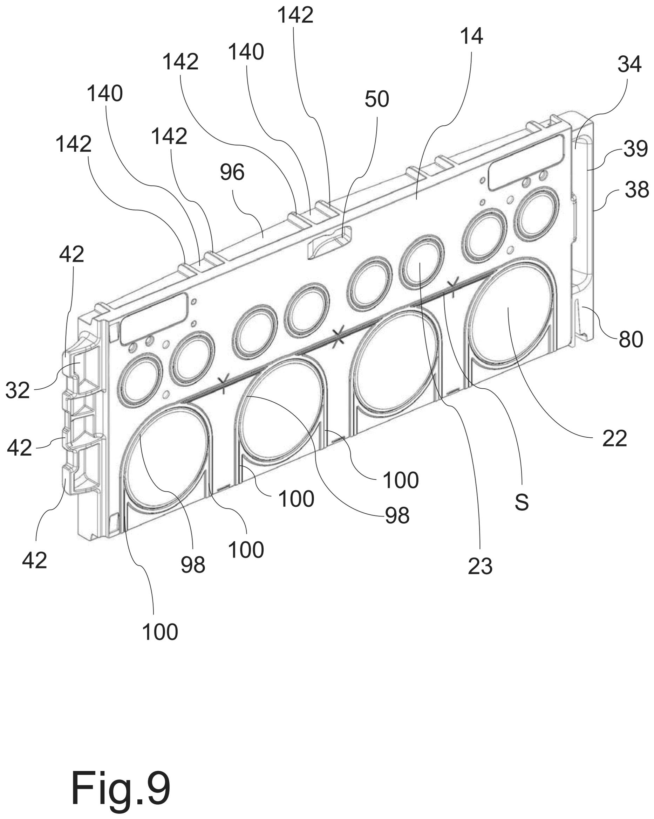

Jedes Wandelement 14 weist auf seiner Oberseite neben dem Aufnahmerand 92 mehrere Nuten 140 auf (siehe beispielsweise Figur 9), die sich senkrecht zur Ebene der Innenseite des Wandelements 14 erstrecken. Jede Nut 140 ist gebildet zwischen zwei sich parallel zueinander erstreckenden Stege 142, die sich an den Aufnahmerand 92 anschließen.

In diese Nuten 140 greifen die Zentriernasen 138 ein (siehe die Figuren 1 bis 4). Die Nuten 140 bilden eine Schiebeführung für die Zentriernasen 138, so dass eine Bewegung des oberen Randes 25 des oberen Moduls 12 relativ zu den Zentriernasen 138 in einer Richtung senkrecht zur entsprechenden Seitenwand 16 möglich ist. Diese Schiebebewegung kann Toleranzen ausgleichen. Außerdem wird der Rahmen 18 nicht belastet, falls die Seitenwände 16 des Schachts 10 durch den wirkenden Erddruck etwas nach innen verformt werden.

Wenn Leitungen mit einem Durchmesser durch die Durchtrittsöffnungen 22 geführt werden, der kleiner als oder gleich dem Durchmesser der entsprechenden Durchtrittsöffnung 22 ist, kann ein Adapterstopfen 143 verwendet werden, um eine an den Durchmesser der Leitung angepasste Öffnung zu erhalten. Der Vorteil besteht darin, dass die Durchtrittsöffnung 22 dadurch im Wesentlichen abgedichtet ist. Falls der untere Rand eines Wandelements 14 zwischen zwei Schwächungszonen 100 entfernt sein, kann auch der hier vorhandene Freiraum abgedichtet sein.

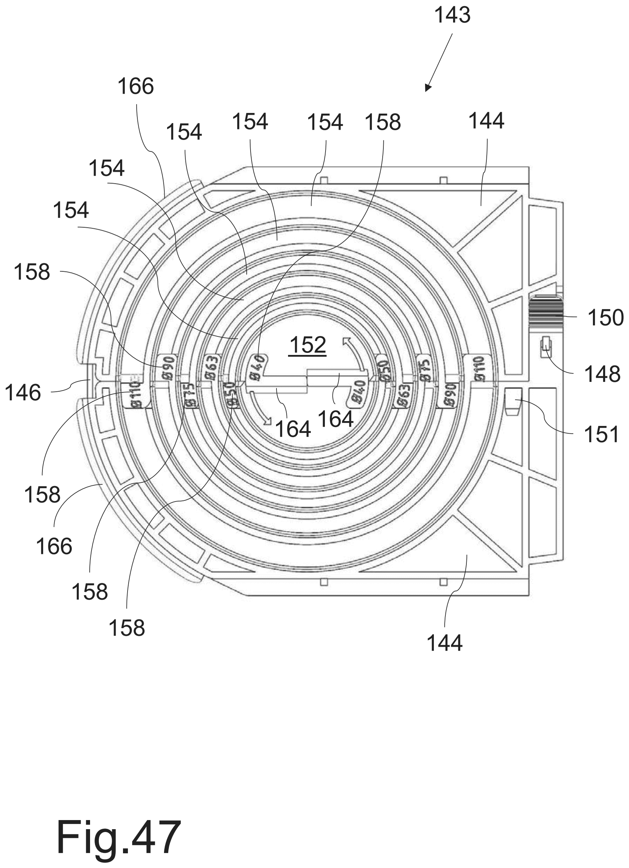

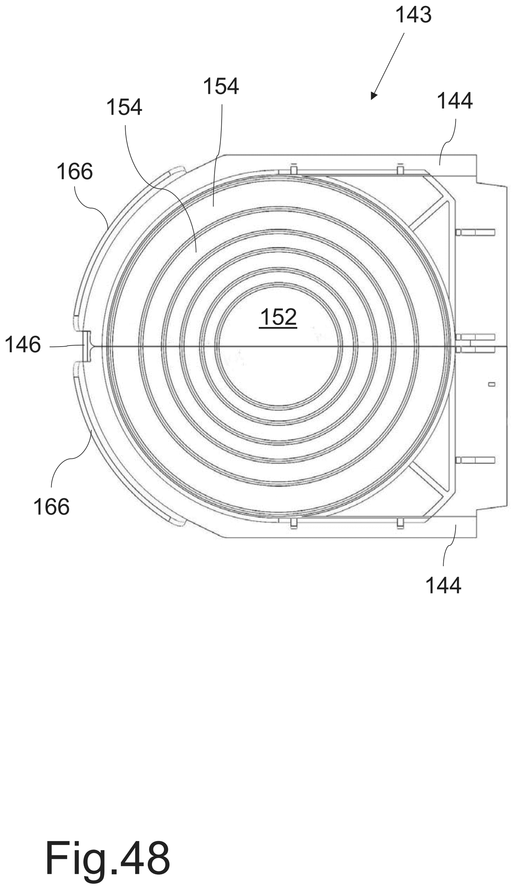

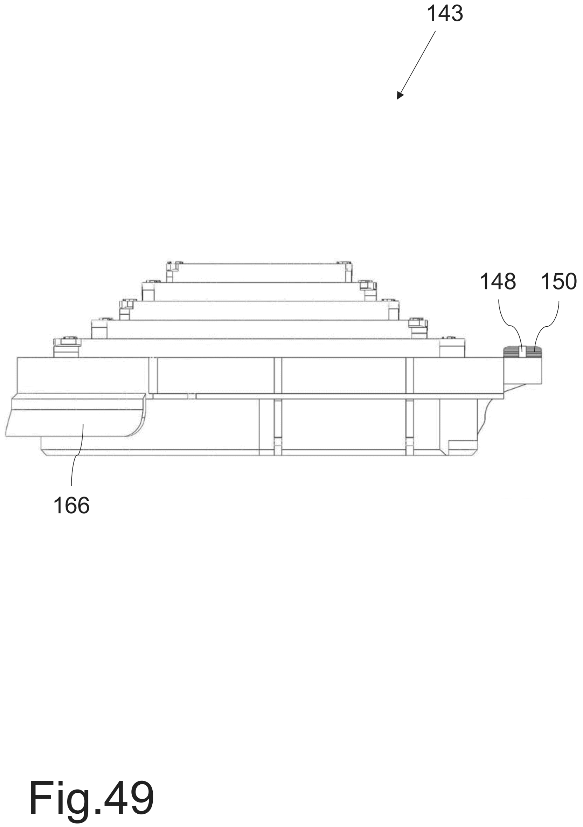

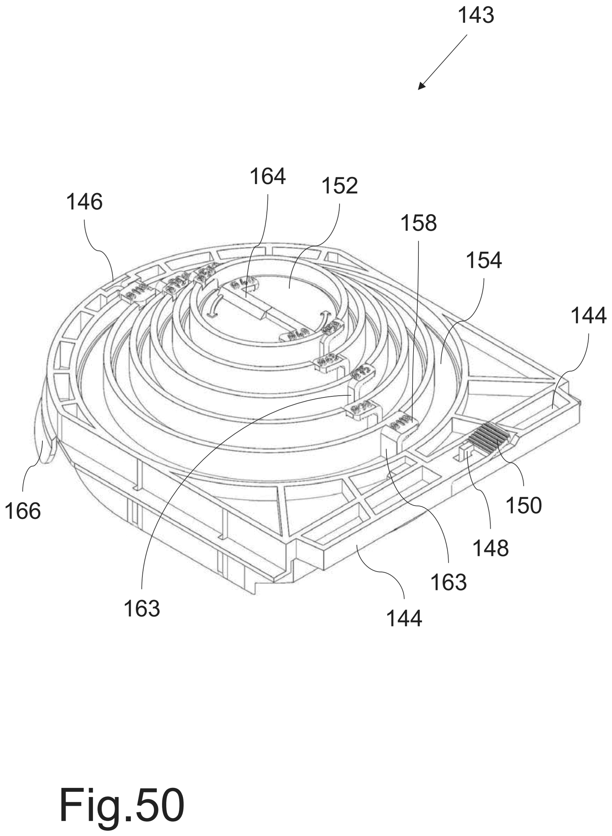

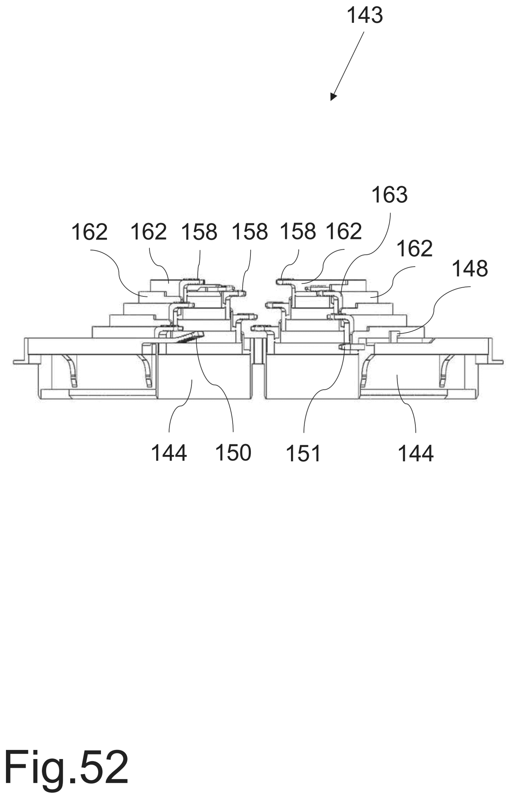

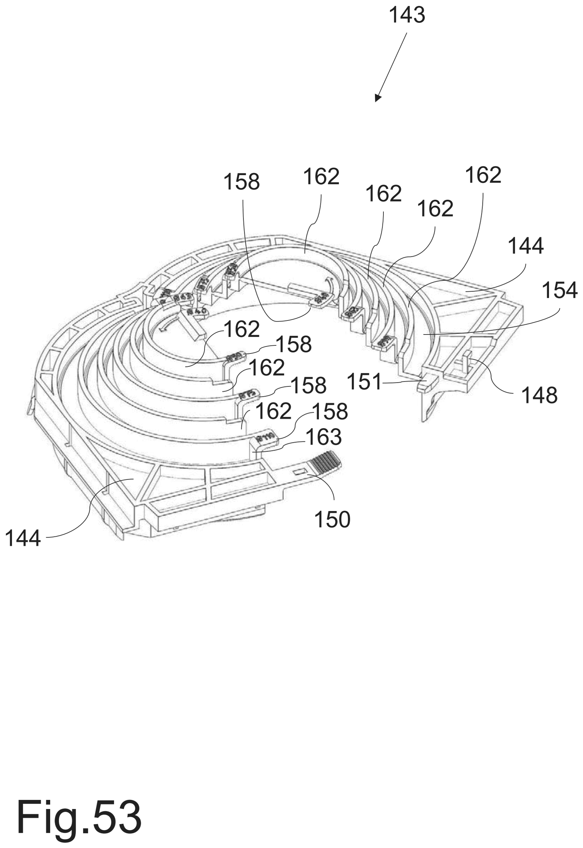

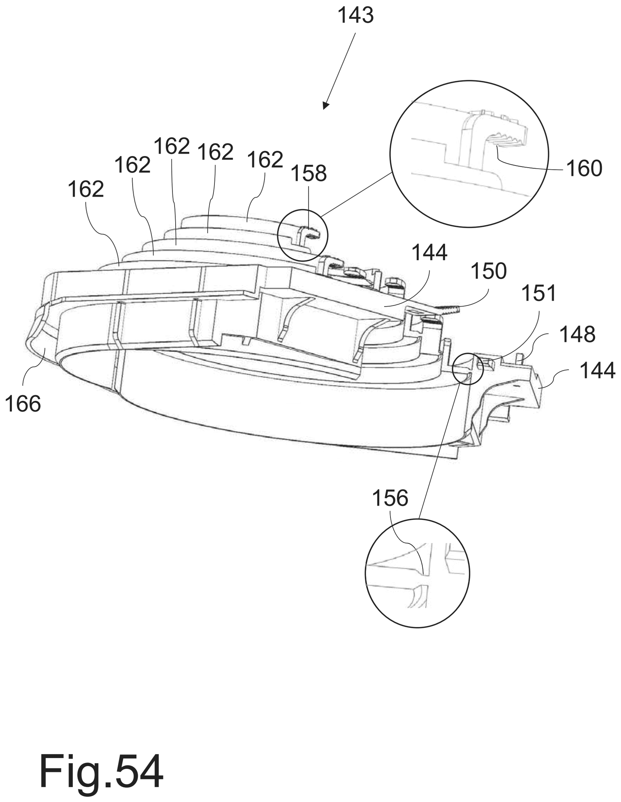

In Figur 4 sind zwei Adapterstopfen 143 an einer Seitenwand 16 angebracht gezeigt. In den Figuren 47 bis 54 ist der Adapterstopfen 143 im Detail gezeigt.

Der Adapterstopfen 143 besteht aus zwei Hälften 144, die ausgehend von einer Montageposition in einen geschlossenen Zustand gebracht werden können. **In** jeder Hälfte 144 wird eine halbkreisförmige Öffnung gebildet, deren Abmessungen an den Außendurchmesser der durchzuführenden Leitung angepasst sind und die zusammen eine kreisrunde Öffnung bilden, wenn die beiden Hälften 144 im geschlossenen Zustand befestigt sind.

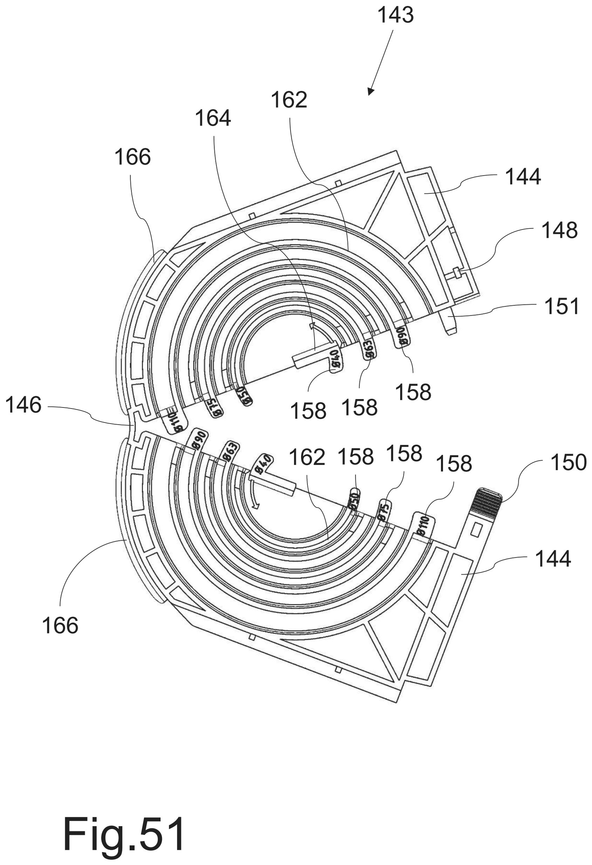

In den Figuren 51 bis 54 ist der Adapterstopfen 143 in einem Zustand gezeigt, wie er aus einem Spritzgusswerkzeug entnommen werden kann und der dem Montagezustand entspricht, in dem die beiden Hälften auf eine Leitung aufgesetzt werden können. Die beiden Hälften 144 sind mittels eines Filmscharniers 146 miteinander verbunden, das an einem Außenrand angeordnet ist.

Am der zum Filmscharnier 146 entgegengesetzten Seite sind an einer Hälfte 144 ein Verschlusshaken 148 und an der anderen Hälfte 144 eine Verschlusslasche 150 vorgesehen, mit der die beiden Hälften 144 an ihrem vom Filmscharnier abgewandten Ende so aneinander befestigt werden können. Dadurch befindet sich der Adapterstopfen 143 in dem in den Figuren 47 bis 50 gezeigten geschlossenen Zustand, in dem die beiden Hälften 144 entlang einer Trennebene aneinander anliegen. Ein Zentrierdorn 151 gewährleistet, dass die Hälften 144 präzise positioniert werden.

In der Gebrauchsstellung sind im Adapterstopfen 143 ein mittiger Kreis 152 und mehrere Ringabschnitte 154 voneinander abgegrenzt, die untereinander durch sollbruchstellenartige Ausreißlinien 156 miteinander verbunden sind. Indem der Kreis 152 und eventuell zusätzlich ein Ringabschnitt 154 oder mehrere Ringabschnitte 154 entfernt werden, kann eine Öffnung mit einem gewünschten Durchmesser erzeugt werden.

Im gezeigten Ausführungsbeispiel hat der Kreis 152 einen Durchmesser von 40 mm. Die Ringabschnitte 154 entsprechen Öffnungen mit Durchmessern von 50 mm, 63 mm, 75 mm, 90 mm und 110 mm.

Die Ringabschnitte 154 sind hier konzentrisch zum mittigen Kreis 152 angeordnet.

Auf jeder Hälfte 144 des Adapterstopfens 143 sind Ausreißlaschen 158 vorgesehen, mit denen der jeweilige Abschnitt vom Rest des Adapterstopfens143 werkzeuglos abgetrennt werden kann. Soll beispielsweise eine Öffnung mit einem Durchmesser von 63 mm erhalten werden, wird auf jeder Hälfte 144 mit der Ausreißlasche 158, die mit 63 beschriftet ist, ein Halbkreis abgetrennt, der aus dem inneren Halbkreis für die Öffnung mit einem Durchmesser von 40 mm, einem Halbring für die Öffnung mit einem Durchmesser von 50 mm und einem Halbring für die Öffnung mit dem Durchmesser von 63 mm besteht.

Damit die Ausreißlasche 158 besser gegriffen werden kann, ist sie auf ihrer nicht beschrifteten Unterseite mit Rippen 160 versehen.

Jeder Ringabschnitt 154 ist auf seiner radial innenliegenden Seite mit einer ringförmigen Verstärkung 162 versehen. Auf der radial außenliegenden Seite jedes Ringabschnittes 154 ist die Ausreißlinie 156 vorgesehen, an die sich radial außen die ringförmige Verstärkung 162 des nächsten Ringabschnittes 154 anschließt.

Die Ausreißlaschen 158 der Ringabschnitte 154 sind zum einen an der ringförmigen Verstärkung 162 angebracht. Zum anderen sind die Ausreißlaschen 158 durch eine Verlängerung 163 direkt mit dem Ringabschnitt 154 verbunden, so dass beim Ausreißen die Zugkräfte unmittelbar neben der Ausreißlinie 156 wirken und das Abtrennen des Ringabschnittes 154 vom außenliegenden, am Adapterstopfen 143 verbleibenden Ringabschnitt 154 erleichtern.

Die Ausreißlaschen 158 der Halbkreise 152 sind an einem massiven Block 164 angebracht, der sich von der Mitte nach außen bis hin zur Ausreißlinie 156 erstreckt.

Wie in Figur 51 zu sehen ist, ragt jede Ausreißlasche 158 von der Hälfte 144 des Adapterstopfens 143, an dem sie angebracht ist, weg, so dass sie bei geschlossenem Adapterstopfen 143 über die Trennebene hinwegragt. Dadurch sind die Ausreißlaschen 158 gut zu greifen.

Um den Abstand zwischen den Ausreißlaschen 158 von benachbarten "Größen" zu erhöhen und es einem Monteur zu erleichtern, die jeweilige Ausreißlasche 158 zu ergreifen, sind die Ausreißlaschen 158 abwechselnd angeordnet. Am Beispiel der in Figur 51 oberen Hälfte 144 ist die Ausreißlasche 158 für die Öffnung mit 40 mm auf der rechten Seite angeordnet, die Ausreißlasche 158 für die Öffnung mit 50 mm auf der linken Seite, die Ausreißlasche 158 für die Öffnung mit 63 mm wieder auf der rechten Seite, usw.

Auf der Seite des Filmscharniers 146 ist der Adapterstopfen 143 mit zwei Klemmlippen 166 versehen (siehe insbesondere die Figuren 47, 48 und 49). Diese sind elastisch federnd und dienen dazu, den Adapterstopfen 143, wenn er an einer Seitenwand 16 des Schachts 10 montiert ist, dort zu verspannen, so dass er in seiner Position verbleibt, bis er nach dem Verfüllen der Grube mit Erdreich gegen die Außenseite des Schachts 10 gedrückt wird.

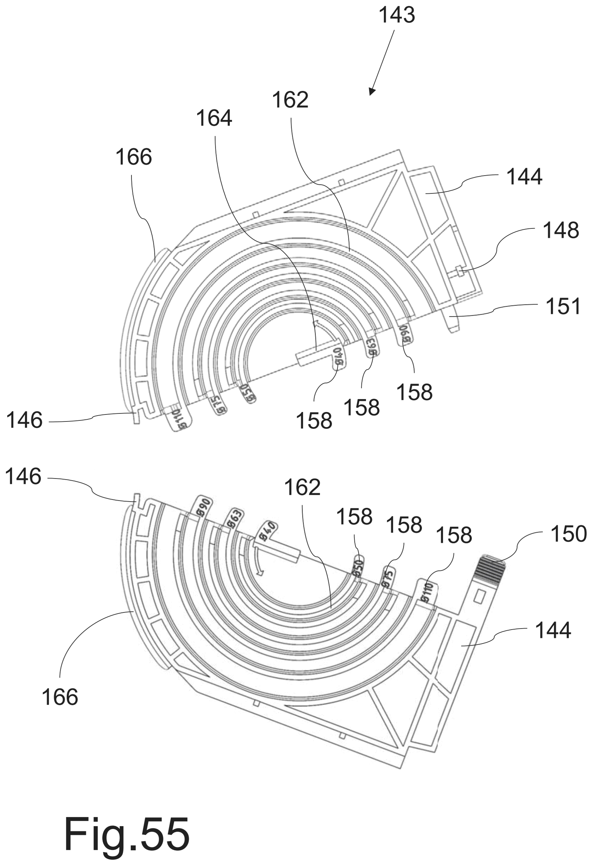

In Figur 55 ist eine Ausführungsvariante gezeigt. Für die von der ersten Ausführungsform bekannten Bauteile und Merkmale werden dieselben Bezugszeichen verwendet, und es wird diesbezüglich auf die obigen Erläuterungen verwiesen.

Der Unterschied zwischen der Ausführungsform der Figuren 47 bis 54 und der Ausführungsvariante von Figur 55 besteht darin, dass bei der Ausführungsvariante kein Filmscharnier verwendet wird, sondern die beiden Hälften als voneinander getrennte Teile hergestellt werden. Bei der Anbringung des Adapterstopfens 143 auf einer Leitung werden die beiden Hälften 144 an einem Ende mit einer Steck- oder Rastverbindung aneinander befestigt (also an dem Ende, an dem bei der vorherigen Ausführungsform das Filmscharnier vorgesehen ist), und am anderen Ende werden die beiden Hälften durch den Verschlusshaken 148 und die Verschlusslasche 150 im geschlossenen Zustand aneinander befestigt.

## Patentansprüche

1. Wandelement (14) für eine Seitenwand eines Schachts (10), insbesondere eines Kabelschachts (10), wobei an entgegengesetzten Rändern komplementäre Bestandteile von Modul-Rasteilen angeordnet sind.

2. Wandelement (14) nach Anspruch 1, **dadurch gekennzeichnet, dass** die Modul-Rastteile durch mindestens eine Stecknase (32) an einem Rand des Wandelements (14) und mindestens eine Steckaufnahme (34) am entgegengesetzten Rand gebildet sind.

3. Wandelement (14) nach Anspruch 2, **dadurch gekennzeichnet, dass** die Stecknase (32) eine sich zum freien Ende verringernde Dicke aufweist.

4. Wandelement (14) nach Anspruch 2 oder Anspruch 3, **dadurch gekennzeichnet, dass** die Stecknase (32) eine gekrümmte Außenfläche aufweist.

5. Wandelement (14) nach einem der Ansprüche 2 bis 4, **dadurch gekennzeichnet, dass** in der Steckaufnahme (34) ein Schnappelement (44) vorgesehen ist, das mit einem Widerlager (46) an der Stecknase (32) eines zweiten Wandelements (14) zusammenwirken kann.

6. Wandelement (14) nach Anspruch 5, **dadurch gekennzeichnet, dass** an der Steckaufnahme (34) und an der Stecknase (32) eine Eingriffsmulde (48) vorgesehen ist, so dass das Schnappelement (44) von Hand aus einer Sperrposition in eine Freigabeposition verstellt werden kann.

7. Wandelement (14) nach Anspruch 6, **dadurch gekennzeichnet, dass** die Modul-Rastteile an einem ersten Ende mindestens zwei Verbindungsblöcke (54) auf einer ersten und einer dritten Position aufweist und am zweiten Ende mindestens zwei Verbindungsblöcke (54) auf einer zweiten und einer vierten Position aufweist, wobei am ersten Ende mindestens zwei Aufnahmeöffnungen (56) auf einer zweiten und einer vierten Position vorgesehen sind und am zweiten Ende mindestens zwei Aufnahmeöffnungen (56) auf einer ersten und einer dritten Position vorgesehen sind.

8. Wandelement (14) nach Anspruch 7, **dadurch gekennzeichnet, dass** an jedem Ende mindestens ein Schnappelement (44) vorgesehen ist, das mit einem Widerlager (46) am zugeordneten Ende eines anderen Wandelements (14) zusammenwirken kann.

9. Wandelement (14) nach Anspruch 8, **dadurch gekennzeichnet, dass** das Widerlager (46) eine Nut aufweist, die als Führung für ein Entriegelungswerkzeug dienen kann.

10. Wandelement (14) nach Anspruch 9, **dadurch gekennzeichnet, dass** zwei Schnappelemente (44) vorgesehen sind.

11. Wandelement (14) nach einem der Ansprüche 7 bis 10, **dadurch gekennzeichnet, dass** an den Verbindungsblöcken (54) und/oder den Aufnahmeöffnungen (56) eine Einführschräge (58) vorgesehen ist.

12. Wandelement (14) nach Anspruch 11, **dadurch gekennzeichnet, dass** ein Führungsvorsprung (59) vorgesehen ist, mit dem die Einführschräge (58) zusammenwirkt, wenn die Ecken miteinander verbunden werden, wobei die Einführschräge (58) im vollständig montierten Zustand außerhalb des Führungsvorsprungs (59) liegt.

13. Modul (12) für einen Schacht (10), wobei das Modul (12) aus vier miteinander verbundenen Wandelementen (14) nach einem der Ansprüche 1 bis 6 besteht, von denen das vierte durch eine kombinierte Steck- und Drehbewegung mit zwei anderen Wandelementen (14) zu einem geschlossenen Modul (12) verbindbar ist.

14. Modul (12) nach Anspruch 13, **dadurch gekennzeichnet, dass** die Wandelemente (14) werkzeuglos voneinander lösbar sind.

15. Modul (12) für einen Schacht (10), wobei das Modul (12) aus vier miteinander verbundenen Wandelementen (14) nach einem der Ansprüche 1 und 7 bis 12 besteht, von denen das vierte durch eine rein translatorische Bewegung mit zwei anderen Wandelementen (14) zu einem geschlossenen Modul (12) verbindbar ist.

16. Modul (12) nach Anspruch 15, **dadurch gekennzeichnet, dass** die Wandelemente (14) mittels eines Steckwerkzeugs voneinander lösbar sind.
